(19) Europäisches Patentamt
European Patent Office
Office européen des brevets

(11) EP 3 500 725 B1

(12) **EUROPEAN PATENT SPECIFICATION**

(45) Date of publication and mention of the grant of the patent:
**07.04.2021 Bulletin 2021/14**

(21) Application number: **17755140.5**

(22) Date of filing: **14.08.2017**

(51) Int Cl.:
***E21B 43/10*** *(2006.01)*

(86) International application number:
**PCT/EP2017/070636**

(87) International publication number:
**WO 2018/033524 (22.02.2018 Gazette 2018/08)**

(54) **FLUID PRODUCTION NETWORK LEAK DETECTION**

ERKENNUNG VON LECKS IN FLÜSSIGKEITSPRODUKTIONSNETZEN

DÉTECTION DE FUITE DE RÉSEAU DE PRODUCTION DE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2016 US 201662375889 P**

(43) Date of publication of application:
**26.06.2019 Bulletin 2019/26**

(73) Proprietors:
- **Services Pétroliers Schlumberger**
  **75007 Paris (FR)**
  Designated Contracting States:
  **FR**
- **Geoquest Systems B.V.**
  **2586 BJ The Hague (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
- **HAUGE, Einar**
  **1383 Asker (NO)**
- **EIDING, Henrik Mathias**
  **1383 Asker (NO)**
- **HAVRE, Kjetil**
  **1383 Asker (NO)**
- **JEVNE, Sigurd**
  **1383 Asker (NO)**

(74) Representative: **Schlumberger Intellectual Property Department**
**Parkstraat 83**
**2514 JG Den Haag (NL)**

(56) References cited:
**US-A1- 2014 262 246**

- **SHOUXI WANG ET AL: "Leak Detection for Gas and Liquid Pipelines by Online Modeling", SPE PROJECTS, FACILITIES AND CONSTRUCTION, vol. 21,7-9,12-15, no. 02, 1 June 2007 (2007-06-01), pages 1-9, XP55417413, USA ISSN: 1942-2431, DOI: 10.2118/104133-PA**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 500 725 B1

## Description

RELATED APPLICATIONS

This application claims priority to and the benefit of a US provisional application having Serial No. 62/375,889, filed 16 August 2016.

BACKGROUND

Production systems can provide for transportation of fluids from well locations to processing facilities, from processing facilities to well locations, etc. Such fluid may be single or multiphase and include one or more hydrocarbon fluids (e.g., oil, natural gas, etc.) and may include one or more other fluids (e.g., water, etc.). As an example, a system may include a substantial number of flowlines and pieces of production equipment, for example, interconnected at junctions to form a network, which may be referred to as a fluid production network. The publication "Leak Detection for Gas and Liquid Pipelines by Online Modeling" by Shouxi Wang et al, SPE Projects, Facilities and Construction, vol. 21, 7-9, 12-15, no. 02, 1 June 2007, pages 1-9 discloses a leak detection method for both gas and liquid pipelines.

SUMMARY

The invention comprises a method as claimed in claim 1.

BRIEF DESCRIPTION OF THE DRAWINGS

Features and advantages of the described implementations can be more readily understood by reference to the following description taken in conjunction with the accompanying drawings.

Fig. 1 illustrates an example field system that includes various components, an example of a method and an example of a device or system;
Fig. 2 illustrates an example of a system and an example of a ternary diagram with an example of an associated table of fluid properties;
Fig. 3 illustrates an example of a system;
Fig. 4 illustrates an example of a network, an example of a system and examples of instructions;
Fig. 5 illustrates an example of a system and an example of a geologic environment and equipment;
Fig. 6 illustrates an example of a system;
Fig. 7 illustrates an example of a method;
Fig. 8 illustrates an example of a method;
Fig. 9 illustrates an example of a plot;
Fig. 10 illustrates an example of a portion of a fluid production network;
Fig. 11 illustrates an example of a plot;
Fig. 12 illustrates an example of a plot;
Fig. 13 illustrates an example of a plot;
Fig. 14 illustrates an example of a graphical user interface;
Fig. 15 illustrates an example of a graphical user interface;
Fig. 16 illustrates an example of a graphical user interface;
Fig. 17 illustrates an example of a computing system; and
Fig. 18 illustrates example components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations.

Fig. 1 shows an example of a geologic environment 110 that includes reservoirs 111-1 and 111-2, which may be faulted by faults 112-1 and 112-2, an example of a method 150 and an example of a device or system 170. Fig. 1 also shows some examples of offshore equipment 114 for oil and gas operations related to the reservoir 111-2 and onshore equipment 116 for oil and gas operations related to the reservoir 111-1.

As an example, a model may be made that models a geologic environment in combination with equipment, wells, etc. For example, a model may be a flow simulation model for use by a simulator to simulate flow in an oil, gas or oil and gas production system. Such a flow simulation model may include equations, for example, to model multiphase flow from a reservoir to a wellhead, from a wellhead to a reservoir, etc. A flow simulation model may also include equations that account for flowline and surface facility performance, for example, to perform a comprehensive production system analysis.

As an example, a flow simulation model may be a network model that includes various sub-networks specified using nodes, segments, branches, etc. As an example, a flow simulation model may be specified in a manner that provides for modeling of branched segments, multilateral segments, complex completions, intelligent downhole controls, etc. As an example, one or more portions of a production network (e.g., optionally sub-networks, etc.) or a group of signal components and/or controllers may be modeled as sub-models.

As an example, a system may provide for transportation of oil and gas fluids from well locations to processing facilities and may represent a substantial investment in infrastructure with both economic and environmental impact. Simulation of such a system, which may include hundreds or thousands of flow lines and production equipment interconnected at junctions to form a network, can involve multiphase flow science and, for example, use of engineering and mathematical techniques for large systems of equations.

As an example, a flow simulation model may include equations for performing nodal analysis, pressure-volume-temperature (PVT) analysis, gas lift analysis, erosion analysis, corrosion analysis, production analysis, injection analysis, etc. In such an example, one or more analyses may be based, in part, on a simulation of flow in a modeled network.

As to nodal analysis, it may provide for evaluation of well performance, for making decisions as to completions, etc. A nodal analysis may provide for an understanding of behavior of a system and optionally sensitivity of a system (e.g., production, injection, production and injection). For example, a system variable may be selected for investigation and a sensitivity analysis performed. Such an analysis may include plotting inflow and outflow of fluid at a nodal point or nodal points in the system, which may indicate where certain opportunities exist (e.g., for injection, for production, etc.).

A modeling framework may include instructions (e.g., processor-executable instructions) to facilitate generation of a flow simulation model. For example, instructions may provide for modeling completions for vertical wells, completions for horizontal wells, completions for fractured wells, etc. A modeling framework may include instructions for particular types of equations, for example, black-oil equations, equation-of-state (EOS) equations, etc. A modeling framework may include instructions for artificial lift, for example, to model fluid injection, fluid pumping, etc. As an example, consider a set of instructions (e.g., a component) that includes features for modeling one or more electric submersible pumps (ESPs) (e.g., based in part on pump performance curves, motors, cables, etc.).

As an example, an analysis using a flow simulation model may be a network analysis to: identify production bottlenecks and constraints; assess benefits of new wells, additional pipelines, compression systems, etc.; calculate deliverability from field gathering systems; predict pressure and temperature profiles through flow paths; or plan full-field development.

As an example, a flow simulation model may provide for analyses with respect to future times, for example, to allow for optimization of production equipment, injection equipment, etc. As an example, consider an optimal time-based and conditional-event logic representation for daily field development operations that can be used to evaluate drilling of new developmental wells, installing additional processing facilities over time, choke-adjusted wells to meet production and operating limits, shutting in of depleting wells as reservoir conditions decline, etc.

As to equations, sets of conservation equations for mass momentum and energy describing single, two or three phase flow (e.g., according to one or more of a LEDAFLOW™ (Kongsberg Oil & Gas Technologies AS, Sandvika, Norway), OLGA™ model (Schlumberger Ltd, Houston, Texas), TUFFP unified mechanistic models (Tulsa University Fluid Flow Projects, Tulsa, Oklahoma), etc.).

As to the method 150 of Fig. 1, it can include a build block 152 for building a network model that represents a production system for fluid; an assignment block 154 for assigning equations to sub-networks in the network model (e.g., where at least one of the sub-networks is optionally assigned equations formulated for solving for pressure and momentum implicitly and simultaneously, conservation mass and energy/temperature in separate stages), a provision block 156 for providing data; a transfer block 158 for transferring the data to the network model; and a simulation block 160 for simulating physical phenomena associated with the production system using the network model to provide simulation results.

The method 150 is shown in Fig. 1 in association with various computer-readable media (CRM) blocks 153, 155, 157, 159 and 161. Such blocks generally include instructions suitable for execution by one or more processors (or processing cores) 172 to instruct the computing device or system 170 to perform one or more actions. While various blocks are shown, a single medium may be configured with instructions to allow for, at least in part, performance of various actions of the method 150. As an example, a computer-readable medium (CRM) may be a computer-readable storage medium that is not a carrier wave, for example, such as a memory device 174 of the computing device or system 170, where the memory device 174 includes memory.

A production system can include equipment, for example, where a piece of equipment of the production system may be represented in a sub-network of a network model (e.g., optionally as a sub-model or sub-models, etc.) and, for example, assigned equations formulated to represent the piece of equipment. As an example, a piece of equipment may include an electric motor operatively coupled to a mechanism to move fluid (e.g., a pump, compressor, etc.). As an example, a piece of equipment may include a heater coupled to a power source, a fuel source, etc. (e.g., consider a steam generator). As an example, a piece of equipment may include a conduit for delivery of fluid where the fluid may be for delivery of heat energy (e.g., consider a steam injector). As an example, a piece of equipment may include a conduit for delivery of a substance (e.g., a chemical, a proppant, etc.).

As an example, a sub-network may be assigned equations formulated to represent fluid at or near a critical point, to represent heavy oil, to represent steam, to represent water or one or more other fluids (e.g., optionally subject to certain physical phenomena such as pressure, temperature, etc.).

As an example, a system can include a processor; a memory device having memory accessible by the processor; and processor-executable instructions stored in the memory of the memory device, the instructions executable to instruct the system to: build a network model that represents a production system for fluid, assign equations to sub-networks in the network model, provide data, transfer the data to the network model, and simulate physical phenomena associated with the production system using the network model to provide simulation results.

As an example, a system can include a sub-network assigned equations formulated for steam associated with equipment for an enhanced oil recovery (EOR) process (e.g., steam-assisted gravity drainage (SAGD) and/or other EOR process).

As an example, a system can include a sub-network that represents a piece of equipment of a production system by assigning that sub-network equations formulated to represent the piece of equipment. In such an example, the piece of equipment may include an electric motor operatively coupled to a mechanism to move fluid (e.g., a compressor, a pump, etc.).

As an example, one or more computer-readable media can include computer-executable instructions executable by a computer to instruct the computer to: receive simulation results for physical phenomena associated with a production system modeled by a network model; and analyze the simulation results.

Fig. 2 shows an example of a schematic view of a portion of a geologic environment 201 that includes equipment and an example of a ternary diagram 250 with an example of a table 260 of associated fluid properties. As shown in Fig. 2, the environment 201 includes a wellsite 202, a network 203 and various examples of surface process equipment such as, for example, a separator 244, a compressor 254 and a pump 256. The wellsite 202 includes a wellbore 206 extending into earth as completed and prepared for production of fluid from a reservoir 211.

In the example of Fig. 2, wellbore production equipment 264 extends from a wellhead 266 of the wellsite 202 and to the reservoir 211 to draw fluid to the surface. As shown, the wellsite 202 is operatively connected to the network 203 via a transport line 261 (e.g., a pipeline). As indicated by various arrows, fluid can flow from the reservoir 211, through the wellbore 206 and onto the network 203 and to a portion thereof 244. Fluid can then flow from the portion of the network 244, for example, to one or more fluid processing facilities.

In the example of Fig. 2, sensors (S) are located, for example, to monitor various parameters during operations. The sensors (S) may measure, for example, pressure, temperature, flowrate, composition, and other parameters of the reservoir, wellbore, gathering network, process facilities and/or other portions of an operation. As an example, the sensors (S) may be operatively connected to a surface unit 216 (e.g., to instruct the sensors to acquire data, to collect data from the sensors, etc.).

In the example of Fig. 2, the surface unit 216 can include various components, such as, for example, a memory device 220, a controller 222, one or more processors 224, one or more interfaces 225 and display unit 226 (e.g., for managing data, visualizing results of an analysis, etc.). As an example, data may be collected in the memory device 220 and processed by at least one of the one or more processor(s) 224 (e.g., for analysis, etc.). As an example, data may be collected from the sensors (S) and/or by one or more other sources. For example, data may be supplemented by historical data collected from other operations, user inputs, etc. As an example, analyzed data may be used to in a decision making process.

In the example of Fig. 2, a transceiver may be provided to allow communications between the surface unit 216 (e.g., via one or more of the interfaces 225) and one or more pieces of equipment in the environment 201 (e.g., one or more equipment interfaces, which may be wired and/or wireless). For example, the controller 222 may be used to actuate mechanisms in the environment 201 via the transceiver, optionally based on one or more decisions of a decision making process. In such a manner, equipment in the environment 201 may be selectively adjusted based at least in part on collected data. Such adjustments may be made, for example, automatically based on computer protocol, manually by an operator or both. As an example, one or more well plans may be adjusted (e.g., to select optimum operating conditions, to avoid problems, etc.). In the example of Fig. 2, a network may be established that is a device network for purposes of transmission and receipt of information (e.g., via network interfaces).

To facilitate data analyses, one or more simulators may be implemented (e.g., optionally via the surface unit 216 or other unit, system, etc.). As an example, data fed into one or more simulators may be historical data, real time data or combinations thereof. As an example, simulation through one or more simulators may be repeated or adjusted based on the data received.

In the example of Fig. 2, simulators can include a reservoir simulator 228, a wellbore simulator 230, and a surface network simulator 232, a process simulator 234 and an economics simulator 236. As an example, the reservoir simulator 228 may be configured to solve for hydrocarbon flow rate (e.g., and optionally one or more pressures) through a reservoir and into one or more wellbores. As an example, the wellbore simulator 230 and surface network simulator 232 may be configured to solve for hydrocarbon flow rate (e.g., and optionally one or more pressures) through a wellbore and a surface gathering network of pipelines. As to the process simulator 234, it may be configured to model a processing plant where fluid containing hydrocarbons is separated into its constituent components (e.g., methane, ethane, propane, etc.), for example, and prepared for further distribution (e.g., transport via road, rail, pipe, etc.) and optionally sale. As an example, the economics simulator 236 may be configured to model costs associated with at least part of an operation. For example, consider MERAK™ framework (Schlumberger Limited, Houston, Texas), which may provide for economic analyses.

In Fig. 2, the ternary diagram 250 includes vertices that represent single-phase gas, oil and water, while the sides represent two phase mixtures (e.g., gas-oil, oil-water and gas-water) and points within the triangle represents a three-phase mixture. The transition region indicates where the liquid fraction changes from water in oil to oil in water and vice versa (e.g., consider emulsions).

The ternary diagram 250 of Fig. 2 also indicates some examples of ranges of multiphase flow regimes, which may be affected by one or more factors such as, for example, temperature, pressure, viscosity, density, flowline orientation, etc. The example flow regimes include annular mist, slug flow and bubble flow; noting that other types of may occur (e.g., stratified, churn, disperse, etc.). Annular mist flow may be characterized by, for example, a layer of liquid on the wall of a pipe and droplets of liquid in a middle gas zone (e.g., mist). Slug flow may be characterized by, for example, a continuous liquid phase and a discontinuous liquid phase that is discontinuous due to separation by pockets of gas. Bubble flow may be characterized by, for example, two continuous liquid phases where at least one of the continuous liquid phases includes gas bubbles. The illustrative graphics of flow regimes in Fig. 2 correspond to flows in approximately horizontal conduits; noting that a conduit may be disposed at an angle other than horizontal and that various factors that can influence flow may depend on angle of a conduit. For example, the angle of a conduit with respect to gravity can have an influence on how fluid flows in the conduit.

The table 260 of Fig. 2 shows viscosity and density as fluid properties. As to one or more other properties, consider, for example, surface tension. As indicated, the table 260 can include information for points specified with respect to the ternary diagram 250. As an example, factors such as pressure, volume and temperature may be considered, for example, as to values of fluid properties, phases, flow regimes, etc.

As an example, information as to flow of fluid may be illustrated as a flow regime map that identifies flow patterns occurring in various parts of a parameter space defined by component flow rates. For example, consider flow rates such as volume fluxes, mass fluxes, momentum fluxes, or one or more other quantities. Boundaries between various flow patterns in a flow regime map may occur where a regime becomes unstable and where growth of such instability causes transition to another flow pattern. As in laminar-to-turbulent transition in single phase flow, multiphase transitions may be rather unpredictable as they may depend on otherwise minor features of the flow, such as the roughness of the walls or the entrainment and entrance conditions. Thus, as indicated in the ternary diagram 250, flow pattern boundaries may lack distinctiveness and exhibit transition zones.

As to properties, where fluid is single phase (e.g., water, oil or gas), a single value of viscosity may suffice for given conditions. However, where fluid is multiphase, two or more concurrent phases may occupy a flow space within a conduit (e.g., a pipe). In such an example, a single value of viscosity (e.g., or density) may not properly characterize the fluid in that flow space. Accordingly, as an example, a value or values of mixture viscosities may be used, for example, where a mixture value is a function of phase fraction(s) for fluid in a multiphase flow space.

As to surface tension (e.g., $\sigma$), it may be defined for gas and liquid, for example, where the liquid may be oil or water. Where two-phase liquid-liquid flow exists (e.g., water and oil), then $\sigma$ may reflect the interfacial tension between oil and water (see, e.g., the slug flow regime and the bubble flow regime).

Fig. 3 shows an example of a schematic diagram of a production system 300 for performing oilfield production operations. As shown in the example of Fig. 3, the production system 300 can include an oilfield network 302, an oilfield production tool 304, one or more data sources 306, one or more oilfield application(s) 308, and one or more plug-in(s) 310. As an example, the oilfield network 302 can be an interconnection of pipes (e.g., conduits) that connects wellsites (e.g., a wellsite 1 312, a wellsite n 314, etc.) to a processing facility 320. A pipe in the oilfield network 302 may be connected to a processing facility (e.g., a processing facility 320), a wellsite (e.g., the wellsite 1 312, the wellsite n 314, etc.), and/or a junction in which pipes are connected. As an example, flow rate of fluid and/or gas into pipes may be adjustable; thus, certain pipes in the oilfield network 302 may be choked or closed so as to not allow fluid and/or gas through the pipe. A pipe may be considered open (e.g., optionally choked) when the pipe allows for flow of fluid and/or gas. As to a choke, choking may allow for adjusting one or more characteristics of a piece of flow equipment (e.g., a cross-sectional flow area, etc.), for example, for adjusting to fully open flow, for adjusting to choked flow and/or for adjusting to no flow (e.g., closed).

As an example, a choke may include an orifice that is used to control fluid flow rate or downstream system pressure. As an example, a choke may be provided in any of a variety of configurations (e.g., for fixed and/or adjustable modes of operation). As an example, an adjustable choke may enable fluid flow and pressure parameters to be changed to suit process or production requirements. As an example, a fixed choke may be configured for resistance to erosion under prolonged operation or production of abrasive fluids.

The oilfield network 302 may be a gathering network and/or an injection network. A gathering network may be an oilfield network used to obtain hydrocarbons from a wellsite (e.g., the wellsite 1 312, the wellsite n 314, etc.). In a gathering network, hydrocarbons may flow from the wellsites to the processing facility 320. An injection network may be an oilfield network used to inject the wellsites with injection substances, such as water, carbon dioxide, and other chemicals that may be injected into the wellsites. In an injection network, the flow of the injection substance may flow towards the wellsite (e.g., toward the wellsite 1 312, the wellsite n 314, etc.).

The oilfield network 302 may also include one or more surface units (e.g., a surface unit 1 316, a surface unit n 318, etc.), for example, a surface unit for each wellsite. Such surface units may include functionality to collect data from sensors (see, e.g., the surface unit 216 of Fig. 2). Such sensors may include sensors for measuring flow rate, water cut, gas lift rate, pressure, and/or other such variables related to measuring and monitoring hydrocarbon production. As shown, the oilfield network 302 can include one or more transceivers 321, for example, to receive information, to transmit information, to receive information and transmit information, etc. As an example, information may be received and/or transmitted via wire and/or wirelessly. As an example, information may be received and/or transmitted via a communications network such as, for example, the Internet, the Cloud, a cellular network, a satellite network, etc.

As an example, the oilfield production tool 304 may be connected to the oilfield network 302. The oilfield production tool 304 may be a simulator (e.g., a simulation framework) or a plug-in for a simulator (e.g., or other application(s)). The oilfield production tool 304 may include one or more transceivers 322, a report generator 324, an oilfield modeler 326, and an oilfield analyzer 328. As an example, the one or more transceivers 322 may be configured to receive information, to transmit information, to receive information and transmit information, etc. As an example, information may be received and/or transmitted via wire and/or wirelessly. As an example, information may be received and/or transmitted via a communications network such as, for example, the Internet, the Cloud, a cellular network, a satellite network, etc.

As an example, one or more of the one or more transceivers 322 may include functionality to collect oilfield data. The oilfield data may be data from sensors, historical data, or any other such data. One or more of the one or more transceivers 322 may also include functionality to interact with a user and display data such as a production result.

As an example, the report generator 324 can include functionality to produce graphical and textual reports. Such reports may show historical oilfield data, production models, production results, sensor data, aggregated oilfield data, or any other such type of data.

As an example, the data repository 352 may be a storage unit and/or device (e.g., a file system, database, collection of tables, or any other storage mechanism) for storing data, such as the production results, sensor data, aggregated oilfield data, or any other such type of data. As an example, the data repository 352 may include multiple different storage units and/or hardware devices. Such multiple different storage units and/or devices may or may not be of the same type or located at the same physical site. As an example, the data repository 352, or a portion thereof, may be secured via one or more security protocols, whether physical, algorithmic or a combination thereof (e.g., data encryption, secure device access, secure communication, etc.).

In the example of Fig. 3, the oilfield modeler 326 can include functionality to create a model of a wellbore and an oilfield network. As shown, the oilfield modeler 326 includes a wellbore modeler 360 and a network modeler 332. As an example, the wellbore modeler 360 can allow a user to create a graphical wellbore model or single branch model. As an example, a wellbore model can define operating parameters (e.g., actual, theoretical, etc.) of a wellbore (e.g., pressure, flow rate, etc.). As an example, a single branch model may define operating parameters of a single branch in an oilfield network.

As to the network modeler 332, it may allow a user to create a graphical network model that combines wellbore models and/or single branch models. As an example, the network modeler 328 and/or wellbore modeler 360 may model pipes in the oilfield network 302 as branches of the oilfield network 302 (e.g., optionally as one or more segments, optionally with one or more nodes, etc.). In such an example, each branch may be connected to a wellsite or a junction. A junction may be defined as a group of two or more pipes that intersect at a particular location (e.g., a junction may be a node or a type of node).

As an example, a modeled oilfield network may be formed as a combination of sub-networks. In such an example, a sub-network may be defined as a portion of an oilfield network. For example, a sub-network may be connected to the oilfield network 302 using at least one branch. Sub-networks may be a group of connected wellsites, branches, and junctions. As an example, sub-networks may be disjoint (e.g., branches and wellsites in one sub-network may not exist in another sub-network).

As an example, the oilfield analyzer 328 can include functionality to analyze the oilfield network 302 and generate a production result for the oilfield network 302. As shown in the example of Fig. 3, the oilfield analyzer 328 may include one or more of the following: a production analyzer 334, a fluid modeler 336, a flow modeler 338, an equipment modeler 340, a single branch solver 342, a network solver 344, a Wegstein solver 348, a Newton solver 350, and an offline tool 346.

As an example, the production analyzer 334 can include functionality to receive a workflow request and interact with the single branch solver 342 and/or the network solver 344 based on particular aspects of the workflow. For example, the workflow may include a nodal analysis to analyze a wellsite or junction of branches, pressure and temperature profile, model calibration, gas lift design, gas lift optimization, network analysis, and other such workflows.

As an example, the fluid modeler 336 can include functionality to calculate fluid properties (e.g., phases present, densities, viscosities, etc.) using one or more compositional and/or black-oil fluid models. The fluid modeler 336 may include functionality to model oil, gas, water, hydrate, wax, and asphaltene phases. As an example, the flow modeler 338 can include functionality to calculate pressure drop in pipes (e.g., pipes, tubing, etc.) using industry standard multiphase flow correlations. As an example, the equipment modeler 340 can include functionality to calculate pressure changes in equipment pieces (e.g., chokes, pumps, compressors, etc.). As an example, one or more substances may be introduced via a network for purposes of managing asphaltenes, waxes, etc. As an example, a modeler may include functionality to model interaction between one or more substances and fluid (e.g., including material present in the fluid).

As an example, the single branch solver 342 may include functionality to calculate the flow and pressure drop in a wellbore or a single flowline branch given various inputs.

As an example, the network solver 344 can includes functionality calculate a flow rate and pressure drop throughout the oilfield network 302. The network solver 344 may be configured to connect to the offline tool 346, the Wegstein solver 348, and the Newton solver 350. As an example, alternatively or additionally, one or more other solvers may be provided, for example, consider a sequential linear programming solver (SLP), a sequential quadratic programming solver (SQP), etc. As an example, a solver may be part of the production tool 304, part of the analyzer 328 of the production tool 304, part of a system to which the production tool 304 may be operatively coupled, etc.

As an example, the offline tool 346 may include a wells offline tool and a branches offline tool. A wells offline tool may include functionality to generate a production model using the single branch solver 342 for a wellsite or branch. A branches offline tool may include functionality to generate a production model for a sub-network using the production model for a wellsite, a single branch, or a sub-network of the sub-network.

As an example, a production model may be capable of providing a description of a wellsite with respect to various operational conditions. A production model may include one or more production functions that may be combined, for example, where each production function may be a function of variables related to the production of hydrocarbons. For example, a production function may be a function of flow rate and/or pressure. Further, a production function may account for environmental conditions related to a sub-network of the oilfield network 302, such as changes in elevation (e.g., for gravity head, pressure, etc.), diameters of pipes, combination of pipes, and changes in pressure resulting from joining pipes. A production model may provide estimates of flow rate for a wellsite or sub-network of an oilfield network.

As an example, one or more separate production functions may exist that can account for changes in one or more values of an operational condition. An operational condition may identify a property of hydrocarbons or injection substance. For example, an operational condition may include a watercut (WC), reservoir pressure, gas lift rate, etc. Other operational conditions, variables, environmental conditions may be considered.

As to the network solver 344, in the example of Fig. 3, it is shown as being connected to the Wegstein solver 348 and/or the Newton solver 350. The Wegstein solver 348 and the Newton solver 350 include functionality to combine a production model for several sub-networks to create a production result that may be used to plan an oilfield network, optimize flow rates of wellsites in an oilfield network, and/or identify and address faulty components within an oilfield network. The Wegstein solver 348 can use an iterative method with Wegstein acceleration.

An oilfield network may be solved by identifying pressure drop (e.g., pressure differential), for example, through use of momentum equations. As an example, an equation for pressure differential may account for factors such as fluid potential energy (e.g., hydrostatic pressure), friction (e.g., shear stress between conduit wall and fluid), and acceleration (e.g., change in fluid velocity). As an example, an equation may be expressed in terms of static reservoir pressure, a flowing bottom hole pressure and flowrate. As an example, equations may account for vertical, horizontal or angled arrangements of equipment. Various examples of equations may be found in a dynamic multiphase flow simulator such as the simulator of the OLGA™ simulation framework (Schlumberger Limited, Houston, TX), which may be implemented for design and diagnostic analysis of oil and gas production systems. As an example, a simulation framework may include one or more sets of instructions for building a model; for fluid and multiphase flow modeling; for reservoir, well and completion modeling; for field equipment modeling; and for operations (e.g., artificial lift, gas lift, wax prediction, nodal analysis, network analysis, field planning, multi-well analysis, etc.).

As an example, a system may implement equations that include dynamic conservation equations for momentum, mass and energy. As an example, pressure and momentum can be solved implicitly and simultaneously and, for example, conservation of mass and energy (e.g., temperature) may be solved in succeeding separate stages.

As an example, an equation for pressure differential can account for factors such as fluid potential energy (e.g., hydrostatic pressure), friction (e.g., shear stress between conduit wall and fluid), and acceleration (e.g., change in fluid velocity). In addition, as mentioned, equations can be used to take into account dynamic aspects. For example, equations can account for time and forces to accelerate and decelerate fluid (e.g., and objects) inserted into multiphase flow (e.g., consider pigs, etc.). As an example, an approach may consider the time it takes to conserve mass and energy (e.g., an amount of time it takes to drain a system, pipeline or vessel). As an example, an approach may consider ramp-up time for production, for example, from one production rate to another production rate, etc. As an example, an approach may consider time it takes before a first condensate appears at an outlet of a production network during startup, etc.

As an example, an equation for a pressure differential (e.g., $\Delta P$) may be rearranged to solve for flow rate (e.g., Q), where the equation may include the Reynolds number (e.g., Re, a dimensionless ratio of inertial to viscous forces), one or more friction factors (e.g., which may depend on flow regime), etc.

Through use of equations for flow into and out of a branch and equating to zero, a linear matrix in unknown pressures may be obtained. As an example, fixed flow branches (i.e., branches in which the flow does not change) may be solved directly for the node pressures.

As an example, a method can include defining variables and residual equations as well as branches in an oilfield network that may include a number of equipment items. As an example, a branch may be divided into sub-branches with each sub-branch containing a single equipment item. As an example, a new node may be used to join each pair of sub-branches. In this example, primary Newton-Raphson variables can include a flow ($Q_{ib}$) in each sub-branch in the network and a pressure $P_{in}$ at each node in the network. In this example, temperature (or enthalpy) and composition may be treated as secondary variables.

As an example, residual equations may include a branch residual, an internal node residual, and a boundary condition. In such an example, a branch residual for a sub-branch relates the branch flow to the pressure at the branch inlet node and the pressure at the outlet node. As an example, internal node residuals can define where total flow into a node is equal to total flow out of the node.

As an example, determining an initial solution may be performed using a production model where for each subsequent iteration, a Jacobian matrix is calculated. The values of the Jacobian matrix may be used to solve a Jacobian equation for the Newton-Raphson update. To solve the Jacobian equation, one or more types of matrix solvers may be used.

In the example of Fig. 3, the one or more data sources 306 include one or more types of repositories for data. For example, the one or more data sources 306 may be Internet sources, sources from a company having ties to the oilfield network 302, or any other location in which data may be obtained. The data may include historical data, data collected from other oilfield networks, data collected from the oilfield network being modeled, data describing environmental or operational conditions.

In the example of Fig. 3, the one or more oilfield applications 308 may be applications related to the production of hydrocarbons. The one or more oilfield applications 308 may include functionality to evaluate a formation, manage drilling operations, evaluate seismic data, evaluate workflows in the oilfield, perform simulations, or perform any other oilfield related function. In the example of Fig. 3, the one or more plug-ins 310 may allow integration with packages such as, for example, a TUFPP model, an Infochem Multiflash model (Infochem Computer Services Ltd., London, UK), an equipment model, etc. (e.g., consider one or more simulators like HYSYS™ (AspenTech, Burlington, Massachusetts), UNISIM™ (Honeywell, Morristown, New Jersey), etc.).

While the example of Fig. 3 shows the oilfield production tool 304 as a separate component from the oilfield network 302, the oilfield production tool 304 may alternatively be part of the oilfield network 302. For example, the oilfield production tool 304 may be located at one of the wellsites (e.g., the wellsite 1 312, the wellsite n 314, etc.), at the processing facility 320, or any other location in the oilfield network 302. As another example, the oilfield production tool 304 may exist separate from the oilfield network 302, such as when the oilfield production tool 304 is used to plan the oilfield network.

Various types of numerical solution schemes may be characterized as being explicit or implicit. For example, when a direct computation of dependent variables can be made in terms of known quantities, a scheme may be characterized as explicit. Whereas, when dependent variables are defined by coupled sets of equations, and either a matrix or iterative technique is implemented to obtain a solution, a scheme may be characterized as implicit.

As an example, a scheme may be characterized as adaptive implicit ("AIM"). An AIM scheme may adapt, for example, based on one or more gradients as to one or more variables, properties, etc. of a model. For example, where a model of a subterranean environment includes a region where porosity varies rapidly with respect to one or more physical dimensions (e.g., x, y, or z), a solution for one or more variables in that region may be modeled using an implicit scheme while an overall solution for the model also includes an explicit scheme (e.g., for one or more other regions for the same one or more variables).

As an example, a scheme may be implemented as part of the "ECLIPSE™ 300" reservoir simulator marketed by Schlumberger Ltd. (Houston, Texas). As an example, the aforementioned OLGA™ simulator may include an interface that allows for interoperability with an ECLIPSE™ simulator. The "ECLIPSE™ 300" reservoir simulator may implement a fully implicit scheme or an implicit-explicit scheme that is implicit in pressure and explicit in saturation, known as IMPES. In the fully implicit scheme, values for both pressure and saturation are provided at the end of each simulation time-step; whereas, the IMPES scheme uses saturation values from the beginning of the time-step to solve for pressure values at the end of the time-step. In such examples, a reservoir simulator iterates until pressures values in grid blocks of a model of the reservoir being simulated have reached some internally consistent solution. However, a solution may be difficult to find if saturation (which the IMPES scheme assumes is constant within a time-step) changes rapidly during that time-step (e.g., a large percentage change in grid block values for saturation). The IMPES scheme may be able to cope with such an issue by decreasing "length" (e.g., duration) of the time-step but at the cost of more time-steps (e.g., in an effort to achieve a more stable solution).

The aforementioned fully implicit scheme may be a more stable option with saturation and pressure being obtained simultaneously so as any difference between their values for one time-step and a next time-step does not disturb a solution process as much as when compared to the IMPES scheme. Thus, in a fully implicit scheme, the "length" (e.g., duration) of a time-step may be larger but it also means that the fully implicit scheme may take additional processing time to achieve solutions (e.g., in comparison with an IMPES scheme). However, in a reservoir where properties change rapidly, a fully implicit scheme may provide a solution in less computational time than an IMPES scheme, even though an iteration of the fully implicit scheme may take longer to complete when compared to an iteration of the IMPES scheme.

The aforementioned "ECLIPSE™ 300" reservoir simulator may also implement one or more components such as a black-oil simulator component, a compositional simulator component, or a thermal simulator component (e.g., for simulating thermodynamics, etc.). As an example, a black-oil simulator component may include equations to model three fluid phases (e.g., oil, water, and gas, with gas dissolving in oil and oil vaporizing in gas); as an example, a compositional simulator component may include equations to model phase behavior and compositional changes; and, as an example, a thermal simulator component may include instructions (e.g., for equations, etc.) to model a thermal recovery processes such as steam-assisted gravity drainage (SAGD), cyclic stream operations, *in-situ* combustion, heater, and cold heavy oil production with sand. As an example, one or more thermal components may provide instructions for modeling and simulating multiple hydrocarbon components in both oil and gas phases, a single nonvolatile component in an oil phase, oil, gas, water, and solids behaviors (e.g., optionally with chemical reactions), well production rates based on factors such as well temperature, low-temperature thermal scenarios (e.g., experiments or cold heavy oil production with sand), toe-to-heel air injection scenarios, foamy oil (e.g., as to effect on gas production, gas drive, oil production, etc.), multi-segmented well models (e.g., optionally including dual-tubing, horizontal wells, multiphase flow effects in a wellbore, etc.).

As to network models, as an example, a method can include simulation of dynamic and/or steady state operation of an oil and gas production system over various ranges of operating conditions and configurations. In such an example, the method may include an implicit evaluation of conservation of energy equations in addition to mass and momentum as an effective technique for efficiently and robustly simulating the production system where, for example, the production system includes fluid such as heavy oil, steam or other fluids at or near critical pressures or temperatures. The term "critical point" is sometimes used herein to specifically denote a vapor-liquid critical point of a material, above which distinct liquid and gas phases do not exist.

As mentioned, a production system can provide for transportation of oil and gas fluids from well locations along flowlines which are interconnected at junctions to combine fluids from many wells for delivery to a processing facility. Along these flowlines (including at one or more ends of a flowline), production equipment may be inserted to modify the flowing characteristics like flow rate, pressure, composition and temperature. As an example, a boundary condition may depend on a type of equipment, operation of a piece of equipment, etc.

As an example, a simulation may be performed using one type of equipment along a flowline and another simulation may be performed using another type of equipment along the same flowline, for example, to determine which type of equipment may be selected for installation in a production system.

As an example, a simulation may be performed using one type of equipment at a position (e.g., with respect to a flowline) and another simulation may be performed using another type of equipment at a different position (e.g., with respect to the same flowline or a different flowline), for example, to determine which type of equipment may be selected for installation in a production system as well as to determine where a type of equipment may be installed. As an example, a simulation may be performed using one type of equipment at a position (e.g., with respect to a flowline) and another simulation may be performed using that type of equipment at a different position (e.g., with respect to the same flowline or a different flowline), for example, to determine where that type of equipment may be installed.

Fig. 4 shows an example of a relatively small production system network 410 (e.g., optionally a portion of a larger network 401), an example of a system 450 and examples of instructions 470. As shown, the network 410 forms somewhat of a tree like structure where flowlines represent branches (e.g., segments) and junctions represent nodes. As shown in Fig. 4, the network 410 provides for transportation of oil and gas fluids from well locations along flowlines interconnected at junctions with final delivery at a central processing facility.

In the example of Fig. 4, various portions of the network 410 may include conduit. For example, consider a perspective view of a geologic environment 403 that includes two conduits which may be a conduit to Man1 and a conduit to Man3 in the network 410. The conduits may be specified at various points by characteristics, which may be characteristics of the environment, characteristics of the conduits, characteristics of fluid in the conduits, etc. For example, consider conduit elevation, which may allow for determination of conduit inclination. As an example, consider conduit cross-sectional flow area, which may be defined by one or more parameters such as, for example, a conduit diameter. As an example, consider fluid that may flow in a conduit where the fluid may be characterized at least in part by a property such as, for example, viscosity (see, e.g., the ternary diagram 250 and the table 260 of Fig. 2 and approaches to multiphase properties, etc.). As an example, thermal conditions may optionally be considered such as, for example, latent heat, heat transfer, etc. As an example, thermal conditions may depend on insulation of equipment, temperature of an environment, wind, sun, rain, snow, etc. Such factors may be considered when assessing an existing network, developing a network, extending a network, etc.

As an example, given information of operating condition(s) at boundary nodes (e.g., where fluid enters and exists the system) and the physical environment between them (e.g., geographical location, elevation, ambient temperature, etc.), a production engineer may aim to design a production system that meets business and regulatory requirements constrained to operating limits of available equipment.

As an example, a method can include implementing one or more components to simulate steady state operation of a production system, for example, as including a network (e.g., as a sub-network, etc.) as in the example of Fig. 4 (also see, e.g., Fig. 1). Such a method may include simulating the steady state operation over a selected range of operating conditions and configurations (e.g., optionally a broadest reasonable range).

As explained, a production system may provide for transportation of oil and gas fluids from well locations to a processing facility and can represent a substantial investment in infrastructure with both economic and environmental impact. Simulation of such a system, which may include hundreds or thousands of flow lines and production equipment interconnected at junctions to form a network, can be complex and involve multiphase flow science and engineering and mathematical methods to provide solutions (e.g., by solving large systems of non-linear equations). Factors associated with solid formation, corrosion and erosion, and environmental impact may increase complexity and cost.

As an example, a method can include formulating a proxy (e.g., or surrogate) model that may be suitable for expediting network analysis. Such a method may, for example, be implemented via a computing system.

As shown in Fig. 4, the example system 450 includes one or more information storage devices 452, one or more computers 454, one or more networks 460 and instructions 470 (e.g., organized as one or more sets of instructions). As to the one or more computers 454, each computer may include one or more processors (e.g., or processing cores) 456 and memory 458 for storing the instructions 470 (e.g., one or more sets of instructions), for example, executable by at least one of the one or more processors. As an example, a computer may include one or more network interfaces (e.g., wired or wireless), one or more graphics cards, a display interface (e.g., wired or wireless), etc. As an example, imagery such as surface imagery (e.g., satellite, geological, geophysical, etc.) may be stored, processed, communicated, etc. As an example, data may include SAR data, GPS data, etc. and may be stored, for example, in one or more of the storage devices 452. As an example, information that may be stored in one or more of the storage devices 452 may include information about equipment, location of equipment, orientation of equipment, fluid characteristics, etc.

As an example, the instructions 470 can include instructions (e.g., stored in the memory 458) executable by at least one of the one or more processors 456 to instruct the system 450 to perform various actions. As an example, the system 450 may be configured such that the instructions 470 provide for establishing a framework, for example, that can perform network modeling. As an example, one or more methods, techniques, etc. may be performed using one or more sets of instructions, which may be, for example, the instructions 470 of Fig. 4.

Fig. 4 shows examples of the instructions 470 as including a graphical user interface (GUI) component 471, a map component 472, an equipment component 473, a data component 474 (e.g., for measured data, synthetic data, etc.), a modeling component 475, and one or more other component 476 where a component can be or include a set of instructions.

As an example, a component can include instructions to instruct a system to render terrain and equipment locations to a display (e.g., via the GUI component 471, the map component 472, the equipment component 473, etc.); receive data for at least a portion of a network (e.g., via the data component 474); analyze the data with respect to a model associated with the terrain and the equipment locations (e.g., via the modeling component 475); and render information to the display based at least in part on an analysis (e.g., via the GUI component 471, a report component, etc.).

As an example, a framework may be implemented using various features of a system such as, for example, the system 450 of Fig. 4. As an example, one or more sets of instructions may be provided that include instructions that may be executed by a processor or processors. As an example, instructions may be provided for execution of instructions in parallel, for example, to consider multiple features of a network or networks that may be associated with a geologic environment such as the geologic environment 110 of Fig. 1.

Production systems for oil and gas often cover multiple wells tied back to a manifold, platform or onshore, etc. (e.g., consider a sub-sea manifold, a wellhead platform, a land-based manifold, etc.). At a manifold or wellhead platform, production from different wells may be co-mingled (e.g., merged, mixed, etc.) and fed to one or more multiphase pipelines that can transport fluid, for example, to topside or central processing facilities. As an example, multiple manifolds and wellhead platforms may feed one topside/central processing facility. As an example, produced fluid from a topside/central processing facilities may again be fed to export pipelines for gas and/or oil to feed a market or a chemical processing plant.

As an example, a fluid production network can include a substantially vertical conduit and a substantially horizontal conduit and/or a substantially vertical conduit and/or a conduit that is neither substantially horizontal nor substantially vertical. As an example, a substantially vertical conduit can be oriented at an angle with respect to horizontal that is greater than about 50 degrees. As an example, a substantially horizontal conduit can be oriented at an angle with respect to horizontal that is less than about 40 degrees (e.g., between - 40 degrees and + 40 degrees depending on whether sloping down or up with respect to a direction, which may be a flow direction). As an example, a model or models can account for orientation, for example, as one or more parameters of a model or models.

As an example, a fluid production network can be or include a multiphase fluid production network. As an example, values output via a model-based framework can include values for fluid flow variables at a plurality of different times (e.g., single phase, multiphase, etc.).

As an example, a system and/or a method may optionally implement one or more Object Linking and Embedding (OLE) for Process Control (OPC) features (e.g., components, standards, etc.). For example, an OPC server may operate in conjunction with one or more OPC clients for transfer of information. OLE for Process Control (OPC) can include one or more types of data transportation technologies, which may include one or more technologies other than OLE (e.g., .NET™ framework, XML, binary-encoded TCP format, etc.).

As an example, one or more industrial information technology (IT) platforms that may include OPC Data Access (DA) functionality can be used to connect to one or more sensors or pieces of equipment, for example, through OPC and/or OPC UA as well as one or more standards such as, for example, MODBUS, WITSML, etc.

As an example, a framework may be optionally coupled to one or more data transmission systems, which may include, for example, a supervisory control and data acquisition (SCADA) system. For example, a framework may provide for monitoring a production system using one or more models where, responsive to model-based results, one or more notifications (e.g., instructions, commands, alarms, etc.) may be communicated via one or more data transmission systems. As an example, a SCADA system can include equipment for monitoring and control, which may operate, for example, with coded signals over communication channels (e.g., a communication channel per remote station, etc.).

As an example, a scheduler and associated components may be run with respect to a framework or frameworks. For example, consider a modeling framework that allows for building of models. As an example, information may be exchanged between frameworks, between components, etc.

Fig. 5 shows an example of a system 500 that includes various management components 510 to manage various aspects of a geologic environment 550 (e.g., an environment that includes a sedimentary basin, a reservoir 551, one or more faults 553-1, one or more geobodies 553-2, etc.). For example, the management components 510 may allow for direct or indirect management of sensing, drilling, injecting, extracting, etc., with respect to the geologic environment 550. In turn, further information about the geologic environment 550 may become available as feedback 560 (e.g., optionally as input to one or more of the management components 510).

In the example of Fig. 5, the management components 510 include a seismic data component 512, an additional information component 514 (e.g., well/logging data), a processing component 516, a simulation component 520, an attribute component 530, an analysis/visualization component 542 and a workflow component 544. In operation, seismic data and other information provided per the components 512 and 514 may be input to the simulation component 520.

In an example embodiment, the simulation component 520 may rely on entities 522. Entities 522 may include earth entities or geological objects such as wells, surfaces, bodies, reservoirs, etc. In the system 500, the entities 522 can include virtual representations of actual physical entities that are reconstructed for purposes of simulation. The entities 522 may include entities based on data acquired via sensing, observation, etc. (e.g., the seismic data per the seismic data component 512 and other information per the additional information component 514). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 520 may operate in conjunction with a software framework such as an object-based framework. In such a framework, entities may include entities based on pre-defined classes to facilitate modeling and simulation. A commercially available example of an object-based framework is the MICROSOFT® .NET™ framework (Redmond, Washington), which provides a set of extensible object classes. In the .NET™ framework, an object class encapsulates a module of reusable code and associated data structures. Object classes can be used to instantiate object instances for use in by a program, script, etc. For example, borehole classes may define objects for representing boreholes based on well data.

In the example of Fig. 5, the simulation component 520 may process information to conform to one or more attributes specified by the attribute component 530, which may include a library of attributes. Such processing may occur prior to input to the simulation component 520 (e.g., consider the processing component 516). As an example, the simulation component 520 may perform operations on input information based on one or more attributes specified by the attribute component 530. In an example embodiment, the simulation component 520 may construct one or more models of the geologic environment 550, which may be relied on to simulate behavior of the geologic environment 550 (e.g., responsive to one or more acts, whether natural or artificial). In the example of Fig. 5, the analysis/visualization component 542 may allow for interaction with a model or model-based results (e.g., simulation results, etc.). As an example, output from the simulation component 520 may be input to one or more other workflows, as indicated by a workflow component 544.

As an example, the simulation component 520 may include one or more features of a simulator such as the ECLIPSE™ reservoir simulator (Schlumberger Limited, Houston Texas), the INTERSECT™ reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 510 may include features of a commercially available framework such as the PETREL® seismic to simulation software framework (Schlumberger Limited, Houston, Texas). The PETREL® framework provides components that allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 510 may include add-ons or plug-ins that operate according to specifications of a framework environment. For example, a commercially available framework environment marketed as the OCEAN® framework environment (Schlumberger Limited, Houston, Texas) allows for integration of add-ons (or plug-ins) into a PETREL® framework workflow. The OCEAN® framework environment leverages .NET™ tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 5 also shows an example of a framework 570 that includes a model simulation layer 580 along with a framework services layer 590, a framework core layer 595 and an instructions layer 575 (e.g., with one or more sets of processor-executable instructions, which may be referred to as components). The framework 570 may include the commercially available OCEAN® framework where the model simulation layer 580 is the commercially available PETREL® model-centric software package that hosts OCEAN® framework applications. In an example embodiment, the PETREL® software may be considered a data-driven application. The PETREL® software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Fig. 5, the model simulation layer 580 may provide domain objects 582, act as a data source 584, provide for rendering 586 and provide for various user interfaces 588. Rendering 586 may provide a graphical environment in which applications can display their data while the user interfaces 588 may provide a common look and feel for application user interface components.

As an example, the domain objects 582 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Fig. 5, data may be stored in one or more data sources (or data stores, generally physical data storage devices), which may be at the same or different physical sites and accessible via one or more networks. The model simulation layer 580 may be configured to model projects. As such, a particular project may be stored where stored project information may include inputs, models, results and cases. Thus, upon completion of a modeling session, a user may store a project. At a later time, the project can be accessed and restored using the model simulation layer 580, which can recreate instances of the relevant domain objects.

In the example of Fig. 5, the geologic environment 550 may include layers (e.g., stratification) that include a reservoir 551 and one or more other features such as the fault 553-1, the geobody 553-2, etc. As an example, the geologic environment 550 may be outfitted with any of a variety of sensors, detectors, actuators, etc. For example, equipment 552 may include communication circuitry to receive and to transmit information with respect to one or more networks 555. Such information may include information associated with downhole equipment 554, which may be equipment to acquire information, to assist with resource recovery, etc. Other equipment 556 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 5 shows a satellite in communication with the network 555 that may be configured for communications, noting that the satellite may additionally or alternatively include circuitry for imagery (e.g., spatial, spectral, temporal, radiometric, etc.).

Fig. 5 also shows the geologic environment 550 as optionally including equipment 557 and 558 associated with a well that includes a substantially horizontal portion that may intersect with one or more fractures 559. For example, consider a well in a shale formation that may include natural fractures, artificial fractures (e.g., hydraulic fractures) or a combination of natural and artificial fractures. As an example, a well may be drilled for a reservoir that is laterally extensive (e.g., a formation present as a substantially horizontal layer or layers). In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 557 and/or 558 may include components, a system, systems, etc. for fracturing, seismic sensing, analysis of seismic data, assessment of one or more fractures, etc.

As mentioned, the system 500 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL® software, for example, that operates on seismic data, seismic attribute(s), etc. As an example, a workflow may be a process implementable in the OCEAN® framework. As an example, a workflow may include one or more worksteps that access a component such as a plug-in (e.g., external executable code, etc.).

As an example, due to one or more factors, a production network may leak. As a production network may span some distance, which may be remote from people, a leak may not be readily detectable. As an example, a framework can provide for leak detection using various data and, for example, one or more models. Data can include, for example, pressure, flow, temperature, etc. As an example, upon detection of a leak or some probability of a leak, one or more actions may be taken to mitigate leakage of fluid or fluids. Such action can depend on locating a source of the leak or sources of leaks. Humans may use, for example, sight, smell and sound. For example, discolored vegetation that is otherwise green along a pipeline right-of-way, or a pool of fluid along a pipeline right-of-way, or a cloud of vapor or mist along a pipeline right-of-way may be indications of leaks.

As an example, a framework may optionally issue one or more commands, instructions, alarms, etc., based at least in part on execution of a leak detection method. As an example, a command may be for a person to travel to a site, a drone to travel to a site (e.g., for data gathering, image gathering, etc.), etc. As an example, a drone may be an air-borne drone, a land drone, a sea drone, etc. As an example, a system can include a user interface for control of a drone and/or for data acquisition by one or more sensors of a drone (e.g., a camera, a microphone, etc.).

As an example, a Leak Detection System (LDS) may be based at least in part on a flow simulator. For example, consider an LDS based on the OLGA multiphase dynamic flow simulator and hosted in the OLGA online real-time architecture (e.g., OLGA framework, etc.).

An LDS can help to provide operational support by detecting a pipeline leak and estimating the location of a leak. As an example, an LDS may support operators in various activities.

As an example, an LDS may run one or more OLGA models which are first principles mathematical representations of the physical production system installation. As an example, an LDS may utilize field-measured values of pressure and flow and compare them to OLGA model-calculated values to determine the existence of pipeline leaks. As an example, once a leak has been detected, an LDS may provide estimates of the leak location.

As an example, an LDS may provide for detection of leaks as to one or more types of pipelines (e.g., consider a scenario of an Oil Pipeline and a Gas Pipeline from Station X to a Resource Processing Facility (RPF) and a Fuel Gas Pipeline from the RPF to Station X).

As an example, for the Oil Pipeline and the Gas Pipeline, field pressure measurements may be included at particular locations (see, e.g., the example of at least a portion of a fluid production network in the field 1000 of Fig. 10):

Station X (inlet, XX km, e.g., 0 km)
Valve station VS7 (X7 km)
Valve station VS5 (X5 km)

Valve station VS4 (X4 km)
Valve station VS3 (X3 km)
Valve station VS2 (X1 km)
RPF (Resource Processing Facility, X0 km)

As an example, consider some examples of field flow measurements at the following locations: Station X (inlet) and RPF.

As an example, for the Fuel Gas Pipeline, field pressure measurements may be included at the following locations:

RPF (inlet, X0 - X0 km, e.g., 0 km)
Valve station VS7 (X0 - X7 km)
Station X (X0 km)

As an example, field flow measurements may be included at the following locations:

RPF (inlet, X0 - X0 km, e.g., 0 km)
Station X (X0 km)

As to leak detection, one or more leak detection models may be utilized per pipeline for an LDS. For example, consider the following two models as examples: Flow - Pressure (FP) and Pressure - Flow (PF). Such detection models, FP and PF, can utilize simulator models (e.g., OLGA models) where the models can differ as to boundary conditions that are applied. For example, a simulator model may be adaptable to different boundary conditions where one set of boundary conditions is provided for an FP detection model and another set of boundary conditions is provided for a PF detection model. As an example, more than one model may be implemented for a pipeline. As an example, a single model may be selected for a pipeline.

As to a FP model, boundary conditions can be inlet flow and outlet pressure. In such an example, field-measured flow and temperature at the pipeline inlet can be used as inlet boundary conditions for the FP detection model and field-measured outlet pressure can be used as the outlet boundary condition. In such an example, a leak can be detected via a pressure and/or flow and/or pressure profile slope imbalance, for example, as may be identified by one or more of the following example conditions: (a) Model-calculated inlet pressure is higher than field-measured inlet pressure; (b) Model-calculated intermediate pressures are higher than field-measured intermediate pressures; (c) Model-calculated outlet flow is higher than field-measured outlet flow; (d) Model calculated slope of pressure profile is higher than field slope of pressure profile (calculated from field measurements) downstream the leak location; and (e) The detection time of a leak is limited by the physical properties of the pipeline, such as length and type of fluid.

As to the PF model, boundary conditions can be inlet pressure and outlet flow. In such an example, field-measured pressure and temperature at the pipeline inlet can be used as inlet boundary conditions for the PF detection model and field-measured outlet flow can be used as the outlet boundary condition. In such an example, a leak can be detected via a pressure and/or flow imbalance, for example, as may be identified by one or more of the following conditions: (a) Model-calculated inlet flow is lower than field-measured inlet flow; (b) Model-calculated intermediate pressures are higher than field-measured intermediate pressures; (c) Model-calculated outlet pressure is higher than field-measured outlet pressure; (d) Model calculated slope of pressure profile is lower than field slope of pressure profile (calculated from field measurements) upstream the leak location; (e) The detection time of a leak is limited by the physical properties of the pipeline, such as length and type of fluid.

Fig. 6 shows an example of a FP leak detection architecture 600 and an example of a PF leak detection architecture 602. The FP leak detection architecture 600 may be implemented as a leak detection framework and the PF leak detection architecture 602 may be implemented as a leak detection framework. As an example, a framework can include one or more processors, memory accessible to at least one of the one or more processors and, for example, at least one interface such as a network interface. In such an example, the framework can be operatively coupled to one or more sensors. For example, considered one or more sensors that can be field sensors that sense one or more types of physical phenomena (e.g., pressure, flow of fluid, temperature, composition, etc.). As an example, a sensor may be a pipeline sensor that can be coupled to a pipeline to sense information about the pipeline and/or fluid within the pipeline, which may be single and/or multiphase fluid. A sensor may include an interface such as a network interface that allows the sensor to receive instruction(s) and/or to transmit information (e.g., sensor data, etc.).

In the architecture 600, a simulator online pipeline 610 can be operatively coupled with a leak detection system (LDS) 620 where a model can be solved using model inlet boundary conditions 640 as to flow (measured) and optionally temperature (measured), which are represented as FM and TM, and using model outlet boundary conditions 650 as to pressure (measured), which is represented as PM. In the architecture 602, a simulator online pipeline 610 can be operatively coupled with a leak detection system (LDS) 622 where a model can be solved using model inlet boundary conditions 642 as to pressure (measured) and optionally temperature (measured), which are represented as PM and TM, and using model outlet boundary conditions 652 as to flow (measured), which is represented as FM.

As shown in Fig. 6, the LDS 620 can receive measured pressure (PM) values and simulated pressure (PS) values as well as measured flow (FM) values and simulated flow (FS) values and optionally measured temperature (TM) values and simulated temperature (TS) values. As shown, along a length of the simulator online pipeline 610, various PM and PS points are indicated, which may correspond to valve stations where one or more sensors may be present that can acquire data such as pressure data.

As shown in Fig. 6, the LDS 622 can receive measured flow (FM) values and simulated flow (FS) values as well as measured pressure (PM) values and simulated pressure (PS) values and optionally measured temperature (TM) values and simulated temperature (TS) values. As shown, along a length of the simulator online pipeline 610, various PM and PS points are indicated, which may correspond to valve stations where one or more sensors may be present that can acquire data such as pressure data.

As an example, the LDS 620 and the LDS 622 may be two operational modes of an LDS, which may operate singly, independently and simultaneously, jointly, etc. As an example, an LDS may be adaptable to operate in one mode or in two modes. As an example, an LDS may be configured to switch from one mode to another mode or, for example, to add a mode where switching may be via receipt of an instruction from an operator, a piece of equipment, a trigger as to one or more conditions, etc.

As an example, a leak detection framework may operate in a real-time mode as a real-time pressure leak detection framework. For example, sensors can acquire information in real-time (e.g., consider a sampling rate of a sample per x minutes where x may be a value less than 10 or other value). In such an example, leak detection may occur on the order of minutes (e.g., less than approximately 30 minutes after commencement of leakage). A leak can be a physical hole in a pipe and/or a clearance between components. As an example, a leak can be directional where a direction can depend on a pressure difference between fluid inside a pipeline and outside the pipeline where the fluid inside (e.g., hydrocarbon fluid, etc.) may differ from the fluid outside (e.g., air, water, etc.). As an example, fluid may move from an exterior space to an interior space or from an interior space to an exterior space depending on a pressure difference (e.g., a pressure differential).

Fig. 7 shows an example of a method 700 that includes a reception block 752 for receiving measurement information from a hydrocarbon fluid production network where the measurement information includes pressure data and fluid flow data; a reception block 754 for receiving simulated information from a model-based framework for the hydrocarbon fluid production network that includes boundary conditions based at least in part on at least a portion of the measurement information; a comparison block 756 for comparing the measurement information and the simulated information to detect a fluid leak in the hydrocarbon fluid production network; a determination block 758 for determining a location of the fluid leak in the hydrocarbon fluid production network; and an output block 760 for outputting the location of the fluid leak in the hydrocarbon fluid production network. In such an example, the location of the leak may not be known a priori. As an example, such a method may include refining the location of the leak with respect to time. For example, where a fluid production network is operating in a substantially steady-state with respect to time, occurrence of a leak can cause the fluid production network to transition from the substantially steady-state to another state. In such an example, the leak can be a physical disturbance to the fluid production network. As an example, the fluid production network may reach (e.g., stabilize at) another substantially steady-state where a portion of fluid is lost via the leak or, for example, where fluid is gained via the leak (e.g., consider water leaking into a pipeline). Where a fluid production network approaches a new steady-state after occurrence of a leak, a method can include revising the location of the leak such that the determined location of the leak becomes more accurate with respect to time. For example, where an initial determination of a location of a leak is 60 km, a revised location may be 62 km and, for example, a further revised location may be 62.3 km.

Where a fluid production network does not reach a substantially steady-state after occurrence of a leak (e.g., after a period of tens of minutes, an hour, etc.), a determined location value may fluctuate, which may infer that the leak is changing with respect to time. For example, if a hole in a pipeline becomes larger over time, the fluid production network that includes that pipeline may not reach a substantially steady-state (e.g., unless the hole stops changing).

As an example, a method can include analyzing at least a portion of measurement information to determine whether a hydrocarbon fluid production network is operating in a steady-state with respect to time. In such an example, the method can include, if the hydrocarbon fluid production network is not operating in a steady-state with respect to time, receiving additional measurement information and based at least in part on the additional measurement information, determining a refined location of the fluid leak in the hydrocarbon fluid production network and outputting the refined location of the fluid leak in the hydrocarbon fluid production network. The term "refined" refers to the location, as determined, more accurately representing the actual, physical location of the leak (e.g., as opposed to the term "refined" as in refining of hydrocarbon fluids).

As an example, a method can include receiving additional measurement information and based at least in part on the additional measurement information, determining a refined location of the fluid leak in the hydrocarbon fluid production network and outputting the refined location of the fluid leak in the hydrocarbon fluid production network.

As an example, a method can include assigning boundary conditions to a model where the boundary conditions can include a fluid flow boundary condition at an upstream location that is based on at least a portion of fluid flow data and a fluid pressure boundary condition at a downstream location that is based on at least a portion of fluid pressure data. In such an example, where the method detects a leak, the location of the leak can be a location that is intermediate the upstream location and the downstream location.

As an example, a method can include assigning boundary conditions to a model where the boundary conditions can include a fluid pressure boundary condition at an upstream location that is based on at least a portion of fluid pressure data and a fluid flow boundary condition at a downstream location that is based on at least a portion of fluid flow data. In such an example, where the method detects a leak, the location of the leak can be a location that is intermediate the upstream location and the downstream location.

As an example, a method can include receiving and/or generating simulation information that includes pressure-flow model-based simulation information and/or flow-pressure model-based simulation information.

As an example, a method can include receiving and/or generating simulation information that includes pressure-flow model-based simulation information and flow-pressure model-based simulation information.

As an example, a fluid leak can be or include a fluid leak of hydrocarbon fluid of a hydrocarbon fluid production network. As an example, a fluid leak can be or include a fluid leak of water into the hydrocarbon fluid production network.

As an example, a method can include determining a location of a fluid leak by, at least in part, detecting a change in slope of a fluid pressure profile of fluid pressure (e.g., and/or detecting a change in difference in slope of field and model fluid pressure profiles) with respect to a distance metric of a hydrocarbon fluid production network. For example, a distance metric may be a number of kilometers, a number of miles, a distance based at least in part on one or more geolocations (e.g., GPS coordinates, etc.), a distance along an axis of a pipeline, which may be linear and/or curve, etc.

As an example, a method such as the method 700 of Fig. 7 can include determining a location of a fluid leak based at least in part on detecting a difference in slope between at least a portion of a measurement information-based pressure profile and at least a portion of a simulated information-based pressure profile with respect to a distance metric of a hydrocarbon fluid production network (see, e.g., the plots 1100 and 1200 of Figs. 11 and 12).

As an example, a hydrocarbon fluid production network can include one or more types of fluids such as, for example, liquid, gas or liquid and gas.

As an example, a method can include receiving equipment information where the equipment information may include operational data for at least one piece of equipment of a hydrocarbon fluid production network. For example, consider a pump as a piece of equipment where operational data for the pump can include pump speed data, pump power data, pump temperature data, pump pressure data, pump operational state data, pump vibration data, etc. In such an example, detection of a leak, information about a leak, information about the fluid production network, information about one or more environmental conditions, information about one or more supply conditions (e.g., power supply, etc.) may be determined at least in part based on the equipment information. For example, where a pump speed is fluctuating or otherwise changing, such fluctuations may be due to an increase presence of gas in liquid (e.g., gas fraction), may be due to an unstable power supply (e.g., whether electrical from a utility, from a gas turbine electrical generator, etc.) and/or due to one or more effects of a leak or leaks (e.g., consider a leak at or proximate to a pump). A model-based framework can include one or more model equipment parameters that may couple equipment information with pressure, flow and/or temperature information about fluid in a fluid production network.

As an example, a method can include outputting a location of a fluid leak in a hydrocarbon fluid production network via a network interface of a computing system. In such an example, the method can include receiving the location via a network interface of a device where the device may be, for example, a mobile device (e.g., a smartphone, a GPS device, a drone, a vehicle, etc.). For example, consider a method that transmits a location of a fluid leak of a fluid production network to a drone or a drone controller such that the drone can travel to the location. In such an example, once underway to the location, the drone may receive a refined location as a leak detection system progresses in its leak location determination accuracy with respect to time (e.g., where the fluid production network stabilizes to a new steady-state, etc.).

As an example, a method can include receiving measurement information that can be or include temperature data. Temperature data may be utilized in modeling fluid in a fluid production network. For example, consider a leak in an undersea pipeline where the pressure of the seawater at the leak location is greater than the pressure of fluid in the undersea pipeline. In such an example, the seawater may enter the undersea pipeline and cause a temperature change, for example, where the seawater may be colder than fluid in the undersea pipeline, the temperature in the pipeline can decrease. Such temperature data can indicate that a leak is from an exterior space to an interior space and, for example, in a portion of a fluid production network where an exterior pressure is likely greater than an interior pressure (e.g., as in an underwater location).

As an example, temperature data may be utilized to assign one or more boundary conditions to a model associated with a leak detection system. As an example, a model may include a PVT relationship. A PVT relationship a form of an equation of state that relates pressure P, molar volume V and temperature T of a physically homogeneous media in thermodynamic equilibrium. Equations of state can be used to define PVT relationships of liquid and gas in the form of a single analytical expression. For example, consider cubic equations of state corresponding to a cubic dependence of pressure on a specific volume (e.g., density) of a liquid and being a modification of van der Waals' equation.

As an example, a fluid production network can be characterized at least in part by one or more profiles, which can include, for example, a pressure profile, a temperature profile, etc. Profile information can facilitate leak detection and/or leak location determination. As an example, profile information may facilitate diagnosing a leak that has been detected, for example, to characterize one or more aspects of the leak (e.g., a leak into a pipeline, a leak out of a pipeline, a stable leak, an unstable leak, etc.).

As an example, a method can include comparing measurement information and simulated information to detect a fluid leak in a hydrocarbon fluid production network where such a method includes performing a probability analysis for fluid leak probability that is based at least in part on at least one physical threshold value.

As an example, a method can include outputting information that includes issuing a notice via at least one interface of a computing system. As an example, a method can include, responsive to detection of a fluid leak, issuing a control instruction to a hydrocarbon fluid production network where the control instruction controls at least one piece of equipment in the hydrocarbon fluid production network.

As an example, a hydrocarbon fluid production network can include a plurality of pipelines. As an example, a hydrocarbon fluid production network can include at least one gas pipeline and at least one fluid pipeline. As an example, a method can include estimating a flow rate of a fluid leak that has been detected.

As an example, a method can include receiving simulated information (e.g., simulation information) which can include information generated via an OLGA simulation (e.g., via an OLGA simulator as a computer-based simulator).

As an example, a method can include rendering at least one graphical user interface to a display that includes a graphic of leak-related information (e.g., location of a leak, pressure change associated with a leak, temperature change associated with a leak, flow rate of a leak, type of leak, stability of a leak, etc.).

As an example, a method can include transmitting leak-related information to a data transmission system that is operatively coupled to a control system for controlling at least a portion of a fluid production network.

As an example, a system can include a processor; memory accessible by the processor; and processor-executable instructions stored in the memory where the instructions include instructions to instruct the system to: receive measurement information from a fluid production network; receive simulated information from a model-based framework for the fluid production network; and compare the measurement information and the simulated information to detect a fluid leak in the fluid production network. As an example, such a system can include instructions to instruct the system to receive measurement information from a hydrocarbon fluid production network where the measurement information includes pressure data and fluid flow data; receive simulated information from a model-based framework for the hydrocarbon fluid production network that includes boundary conditions based at least in part on at least a portion of the measurement information; compare the measurement information and the simulated information to detect a fluid leak in the hydrocarbon fluid production network; determine a location of the fluid leak in the hydrocarbon fluid production network; and output the location of the fluid leak in the hydrocarbon fluid production network.

As an example, one or more computer-readable storage media can include computer-executable instructions executable by a computer (e.g., a computing device, a computing system, a distributed computing system, etc.) where the instructions include instructions to: receive measurement information from a fluid production network; receive simulated information from a model-based framework for the fluid production network; and compare the measurement information and the simulated information to detect a fluid leak in the fluid production network. As an example, such one or more computer-readable storage media can include instructions to instruct the system to receive measurement information from a hydrocarbon fluid production network where the measurement information includes pressure data and fluid flow data; receive simulated information from a model-based framework for the hydrocarbon fluid production network that includes boundary conditions based at least in part on at least a portion of the measurement information; compare the measurement information and the simulated information to detect a fluid leak in the hydrocarbon fluid production network; determine a location of the fluid leak in the hydrocarbon fluid production network; and output the location of the fluid leak in the hydrocarbon fluid production network.

Fig. 7 also show various blocks that may be utilized as part of the method 700. For example, a pressure-flow model block 782 may be utilized (e.g., accessed, etc.), a flow-pressure model block 784 may be utilized (e.g., accessed, etc.), a steady-state analysis block 786 may be utilized (e.g., accessed, etc.), and/or a location update block 788 may be utilized (e.g., accessed, etc.). As shown in Fig. 7, the pressure-flow model (PF model) block 782 can utilize particular boundary conditions as to pressure and flow (e.g., fluid pressure inlet boundary condition(s) and fluid flow outlet boundary condition(s) as in the detection architecture 602 of Fig. 6) and the flow-pressure model (FP model) block 784 can utilize a different arrangement of boundary conditions as to flow and pressure (e.g., fluid flow inlet boundary condition(s) and fluid pressure outlet boundary condition(s) as in the detection architecture 600 of Fig. 6).

Further, Fig. 7 shows various blocks 753, 755, 757, 759 and 761, which can be computer-readable medium blocks that include instructions such as, for example, processor-executable instructions. Such blocks may be provided as one or more computer-readable storage media and utilized by a system such as the surface unit 216 of Fig. 2 (e.g., as part of the memory device 220, etc.) to perform one or more actions of the method 700 of Fig. 7, the system 450 of Fig. 4 (e.g., as part of the memory 458, the instructions 470, etc.) to perform one or more actions of the method 700 of Fig. 7, etc. (see also, e.g., the system 1700 of Fig. 17, the system 1800 of Fig. 18, etc.). As an example, the method 700 of Fig. 7 may be a computer-implemented method.

Fig. 8 shows an example of a method 800 that includes performing a Bayesian changepoint analysis (BCA). As shown, the method 800 includes a detection block 810 for detecting a pair, a BCA block 820 for performing a Bayesian changepoint analysis (BCA), a threshold check block 830 for checking probability and threshold(s), a probability block 840 for determining a total probability of one or more pairs, an issuance block 850 for issuing a warning and/or an alarm, and an estimation block 860 for estimating one or more leak location (e.g., an optionally outputting one or more leak location estimates).

As an example, a method can include making comparisons between model-calculated and corresponding field-measured values. In such an example, a model-calculated value and a corresponding field-measured value can be defined as a detection pair. A detection pair can have a corresponding location value, which can be defined by a distance metric. As an example, a detection pair can be assigned a coordinate or coordinates. Such a coordinate or coordinates may be, for example, a GPS coordinate or GPS coordinates. A coordinate or coordinates may be rendered to a graphical user interface, optionally with respect to a fluid production network that is at least in part modeled. As an example, a model-calculated value and a corresponding field-measured value may be identical in location in that the model-calculated value corresponds identically with a sensor or sensors in a fluid production network or, for example, an offset or offsets may exist. As an example, an offset may be of the order of a few meters or less. In such an example, a model-calculated value may be for approximately the same location as a field-measured value.

As an example, an individual detection pair, for example, "n" or "N" total pairs, may be processed according to a method such as the method 800 of Fig. 8. As an example, a detection pair can be sent through to a Bayesian Changepoint Analysis (BCA) routine where the output from the routine is a probability calculation for a breach of one or more defined detection thresholds. In such an approach, each of a plurality of probability calculations may be combined in a weighted average for a total probability calculation that can be used for raising leak warnings and/or alarms. The combined approach, as in a method that includes combining the probability calculation from each of a plurality of detection pairs (e.g., N total pairs), can provide robustness and reduce the amount of false alarms. As an example, a user may adjust one or more weights, optionally during runtime of a leak detection framework in order to strike an appropriate balance between detection sensitivity and robustness based on field performance experience. As an example, during a shutdown, a leak may be located based on one or more pressure detection pairs.

As an example, a framework may provide for one or more automatic shutdown actions. For example, a framework may be configured in the field as part of a Process Control System (PCS) that can respond at least in part to leak alarms generated by one or more LDSs. As an example, when a leak has been detected, an LDS algorithm of a framework can estimate a leak rate and a volume that is lost (e.g., at various points in time, optionally cumulative). As an example, a leak rate may be estimated by subtracting an outlet field-measured flow rate from an outlet FP model-calculated flow rate and/or by subtracting the inlet field-measured flow rate from the inlet PF model-calculated flow rate. As an example, a lost volume can be calculated by integrating one or more differences with respect to time. As mentioned, when a leak has been detected, a method can include providing an estimate of the leak location, which may be updated depending on the nature, dynamics, etc., of the leak and/or the fluid production network or portion thereof where the leak has occurred.

As an example, a framework can include input data validation. For example, field measured data, such as pressures, temperatures and flow rates, can be subjected to a data validation process where integrity of the data is determined (e.g., according to one or more integrity metrics). As an example, a data validation process or processes can perform one or more of the following health checks: OPC Quality, as a check of the health of a connection to field data (e.g., a connection to a SCADA OPC server, DCS OPC server, Process Information (PI) Historian (OSIsoft, LLC, San Leandro, California, USA), etc.); Watchdog, as a check to determine whether updated values are coming through (e.g., if a value is static for too long, an alarm can be raised); Range, as a check to determine if a value from the field is within a defined minimum range and/or a defined maximum range; and Rate of change, as a check for rapid changes (e.g., and/or spikes) in field measured data.

As an example, one or more integrity checking processes can be implemented as instructions executable by one or more processors and/or other types of circuitry. For example, a range checking circuit may be implemented that checks data and/or signals with respect to one or more criteria (e.g., mean, standard deviation, lower limit, upper limit, frequency of data received, frequency of signal, etc.). As an example, integrity output from one or more data validation processes (e.g., electronic components, circuitry, etc.) can be used by a leak detection algorithm to automatically disregard one or more detection pairs that utilize "bad" integrity data (e.g., data that has not passed one or more integrity checks). Such an approach can improve robustness of a leak detection method, for example, by helping to diminish false alarms (e.g., in the presence of one or more issues with one or more field transmitters and/or related transmission equipment).

As an example, an LDS can assess flowing conditions based on the nature of how pressure drop across a pipeline changes in the presence of a leak. Such an approach can be applicable for pipelines where ambient pressure is lower than pipeline pressure, hence where fluid is likely to leak out of the pipeline.

As an example, leak location estimation during flowing conditions can include: (i) estimation of a location of a pipeline interval (e.g., between two field pressure measurements) where a leak has occurred; and (ii) estimation of a more accurate leak location within the pipeline interval as identified. In such an example, (i) and (ii) can be psychologically appealing to an operator or operators, for example, to quickly be able to identify an approximate leak location in terms of pipeline interval and to begin searching for the leak, by for example helicopter or drone, such that the searching may start as soon as the problematic pipeline interval is identified. As to honing in on a more accurate location, this can occur over a time frame for which the pipeline reaches a new steady state after the leak has developed, if that type of dynamic is present (e.g., a transition from one steady-state pre-leak to another, different steady-state post-leak).

As an example, the amount of time to provide an estimate of an accurate location of a leak may be limited by physical properties of the pipeline, such as length and type of fluid (gas, oil, multiphase). As an example, a method can include performing an uncertainty estimate. An uncertainty estimate may be provided as part of a dynamic output process that accompanies location output, for example, to help an operator determine if an estimate of the leak location is and/or has converged.

Fig. 9 shows an example of a plot 900 of pressure profiles. Specifically, the plot 900 shows the pressure profiles in the field and for a FP detection model and for a PF detection model after a leak has occurred at a location that is approximately 30 kilometers between 0 (e.g., input) and 95 kilometers (e.g., output). Without such a leak, the three pressure profiles would tend to overlap (e.g., be substantially the same).

In the plot 900, the leak can be identified by visual and/or by machine inspection of the field pressure profile, for example, due to a discontinuity in pressure drop. Such a profile can be interpolated between data points that correspond to locations. For example, field pressures at sensor locations can be received by an LDS and plotted with line segments or other fitting technique. As an example, an LDS may implement machine inspection (e.g., pattern recognition, etc.) with respect to ADPDL variables as in, for example, Fig. 11 and 12. Such an approach can be utilized additionally or alternatively to machine inspection directly on one or more pressure profiles.

As an example, machine inspection may be via line detection and slope calculation and/or via calculation of one or more slopes, differences, etc., of data (e.g., consider implementation of one or more of edge detection, line detection, pattern recognition, etc.). As to differences, such an approach is illustrated in the plots 1100 and 1200 of Figs. 11 and 12, respectively, as explained further below.

As an example, a method may include performing one or more analyses to determine one or more of the following conditions: (i) The slope of the field and FP Model profiles are approximately parallel upstream the leak, hence the difference in slope is approximately 0; (ii) The slope of the field and FP Model profiles are not parallel downstream the leak, hence the difference in slope is > 0 (FP model slope minus field slope); (iii) The slope of the field and PF Model profiles are approximately parallel downstream the leak, hence the difference in slope is approximately 0; and (iv) The slope of the field and PF profiles are not parallel upstream the leak, hence the difference in slope is < 0 (PF model slope minus field slope).

Such conditions can occur for various fluids, flow rates and leak sizes, for example, under an assumption that a pipeline remains in friction dominated operation. That is, an increased flow rate leads to a higher pressure drop and reduced flow rate leads to a lower pressure drop.

An analysis may be more involved where fluid in a fluid production network exhibits multiphase behavior. In multiphase flow, a pressure drop may increase as a result of lower production rate due to increased hold-up in a pipeline. In such an example, one or more assumptions for leak location may be revised, dropped, added, etc.

The features of one or more profiles, comparatively, can tend to hold for various flow rates and leak sizes, for example, given an assumption that the pipeline remains in friction dominated operation. That is, an increased flow rate leads to a higher pressure drop and reduced flow rate leads to a lower pressure drop.

As an example, where production exhibits multiphase behavior (e.g., compressible or compressible and incompressible phases, etc.), pressure drop could increase as a result of a lower production rate due to increased hold-up in the pipeline. As an example, an algorithm may account for such a scenario. For example, where a model includes a multiphase model, a multiphase model simulation or simulations may be performed and/or accessed as may be stored in one or more databases, optionally reduced via fitting, etc. As an example, a neural network or other type of machine learning technique may be utilized to analyze data, which can include field data and/or model data for various scenarios. As an example, an LDS can include a single phase analysis and a multiphase analysis where such analyses may be selectable via a user interface and/or automatically selected, for example, based on information from a production network and/or model of a production network.

As an example, a framework can be suitable for one or more types of fluid production networks, which may be homogeneous or heterogeneous. For example, for gas pipelines, the pressure drop in single phase gas pipelines can be largely due to friction. In the event of a leak, the difference in gravitational pressure drop between the field and the detection models can be quite small or negligible. As another example, consider oil pipelines, where in the event of a leak in a single phase oil pipeline, the change in static fluid pressure can be negligible and the difference in pressure between the FP and PF models and the field can be due to a difference in frictional pressure drop. As yet another example, consider multiphase (gas/liquid) pipelines, where at low flow rates, terrain induced slugging may affect accuracy of a location estimate. At higher flow rates, multiphase pipelines tend to remain in friction dominated operation and the assumption set forth above can hold.

Fig. 10 shows an example of a field 1000 that includes various types of equipment that may be part of a fluid production network. In the example of Fig. 10, the field includes a hub 1004 and a resource processing facility (RPF) 1008 as well as pipelines 1022, 1024 and 1026 that can carry fluid(s) therebetween. Such fluid or fluids may be produced and/or transported to one or more sites 1021, 1023, 1025, 1052-1, 1052-2, 1052-3, 1052-4, 1052-5 and 1052-6, which may be at surface and/or subsurface (e.g., subterranean). As an example, a pipeline may be a surface, subsurface or underwater pipeline and/or include one or more portions that may be at a surface location, at a subsurface location or at an underwater location.

In the example of Fig. 10, the hub 1004 may provide for production and/or separating oil and gas and for delivering one or more fluids to the RPF 1008. As an example, a fluid production network can be operatively coupled to or include equipment for dehydrating, injecting, etc. In the example of Fig. 10, the pipelines 1022, 1024 and 1026 may be, for purposes of context, approximately 100 km. As to some examples of production of fluid(s), consider one or more production rates (e.g., flow rates) that may be in a range from about 1,000 m3/d to more than 100,000 m3/d; noting that under a shutdown condition, a rate may be approximately 0.

As an example, in an LDS, a method that operates at least in part on an analysis as illustrated in the plot of Fig. 9 (e.g., model versus data, etc.) may provide for adequate detection for various pipelines and/or fluids in pipelines.

As an example, an LDS may provide for leak detection in a Fuel Gas Pipeline (Fuel Gas Pipeline operating in single phase); an Oil Pipeline (e.g., oil flowing through the Oil Pipeline being semi-stabilized where small amounts of gas can evaporate during shutdowns, but during flowing conditions, no gas evaporation may be expected; hence, it can be expected that an assumption as to the approach illustrated in Fig. 9 may hold; noting that such an assumption may also hold for small amounts of gas present in an oil pipeline); a Gas Pipeline (e.g., the Gas Pipeline including some amount of liquid and experiencing multiphase behavior to a large extent where it has been observed, that at low flow rates, the pipeline may be exposed to terrain induced slugging where it may be likely that the accuracy of the location estimate may be reduced at lower flow rates; whereas, at normal and high flow rates, the pipeline remains largely in friction dominated operation and an assumption as to the approach illustrated in Fig. 9 may hold).

As an example, flow rates, in terms of fluid velocity, may be of the order of meters per second (e.g., for a pipeline of about 28 inches in diameter or, for example, about 24 inches to about 30 inches in diameter; noting that other size pipelines may be considered). As an example, consider the following fluid velocities in pipelines as examples: Gas: < 8 m/s and Oil: < 2.5 m/s (e.g., about a 28 inch diameter pipeline, etc.).

As an example, consider a pipeline with pressure measurements at the inlet, outlet and five intermediate locations. The pipeline is then divided into six intervals. Step 1 of the leak location algorithm will be able to locate the appropriate interval among the six, for flowing conditions:

Interval 1: Inlet pressure measurement to 1st intermediate pressure measurement
Interval 2: 1st to 2nd intermediate pressure measurement
Interval 3: 2nd to 3rd intermediate pressure measurement
Interval 4: 3rd to 4th intermediate pressure measurement
Interval 5: 4th to 5th intermediate pressure measurement
Interval 6: 5th intermediate pressure measurement to outlet pressure measurement

A method for finding a leak location in terms of the pipeline intervals can be based on observations of a pressure profile slope change upstream and downstream the leak, as described above.

As an example, a basis of a leak location estimation concept can be a calculation of a difference in a pressure profile slope in the FP and PF detection models (e.g., based on OLGA calculated values) and corresponding pressure profile slope in the field (e.g., based on field measurements). Such a calculation can be performed for each pipeline interval between two field pressure measurements, for each of the two detection models FP and PF:

$$\Delta \boldsymbol{DPDL}_{\boldsymbol{FP,i}} = \frac{\Delta P_{i,FP}}{\Delta L_{i,OLGA}} - \frac{\Delta P_{i,FIELD}}{\Delta L_{i,FIELD}} \qquad (1)$$

$$\Delta DPDL_{PF,i} = \frac{\Delta P_{i,PF}}{\Delta L_{i,OLGA}} - \frac{\Delta P_{i,FIELD}}{\Delta L_{i,FIELD}} \qquad (2)$$

where,

$\Delta P_{i,FP}$ = pressure difference for pipeline segment i in the FP Model
$\Delta P_{i,FP}$ = pressure difference for pipeline segment i in the PF Model
$\Delta P_{i,FIELD}$ = pressure difference for pipeline segment i in the field
$\Delta L_{i,OLGA}$ = length of pipeline segment i in the FP and PF models
$\Delta L_{i,FIELD}$ = length of pipeline segment i in the field

Above, the units of $\Delta DPDL_i$ may be [Pa/m] or [bar/100km]; noting that $\Delta L_{i,OLGA}$ may be slightly different compared to $\Delta L_{i,FIELD}$ due to the pipeline sectioning in the OLGA model (e.g., as mentioned above). Where a difference in sensor location and model location is less than approximately 0.01 percent (e.g., 0.005 percent or less), accuracy of a leak detection method may be negligible. For example, in a 100 km length of pipeline, a difference of approximately 5 m can be negligible as to leak detection and/or leak location estimation. As an example, a difference may be of the order of a few meters.

As an example, a leak location in terms of pipeline interval may be determined by analyzing the $\Delta DPDL_{i,FP}$ and $\Delta DPDL_{i,PF}$ variables.

Fig. 11 shows an example plot 1100 of $\Delta DPDL_{i,FP}$ vs time [hours]. Specifically, the plot 1100 shows FP Model and Field pressure slope differences for a leak in pipeline interval 3 as a trend plot where it can be determined that:

Before the leak occurs after 0.5 hours, all $\Delta DPDL_{i,FP} \sim 0$

After the leak has occurred:

In the pipeline intervals upstream the leak, $\Delta DPDL_{us,FP} \sim 0$ because the pressure profiles are fairly parallel;
In the pipeline intervals downstream the leak, $\Delta DPDL_{ds,FP} > 0$ because the pressure profiles are not parallel; and
In the pipeline interval where the leak is found, $\Delta DPDL_{us,FP} < \Delta DPDL_{leak} < \Delta DPDL_{ds,FF}$.

Fig. 12 shows an example plot 1200 of $\Delta DPDL_{i,PF}$ vs time [hours], specifically, PF Model and Field pressure slope differences for a leak in pipeline interval 3 as a trend plot, where it can be determined that:

Before the leak occurs after 0.5 hours, all $\Delta DPDL_{i,PF} \sim 0$

After the leak has occurred:

In the pipeline intervals upstream the leak, $\Delta DPDL_{us,PF} < 0$ because the pressure profiles are not parallel;
In the pipeline intervals downstream the leak, $\Delta DPDL_{ds,PF} \sim 0$ because the pressure profiles are fairly parallel; and
In the pipeline interval where the leak is found, $\Delta DPDL_{us,PF} < \Delta DPDL_{leak} < \Delta DPDL_{ds,FF}$.

The plots 1100 and 1200 show signatures that can be used to locate leaks in terms of pipeline interval. In such examples, the leak is located in the pipeline interval that calculates a difference in pressure profile slope that is in-between the two other groups of differences in slope. In this example, it can be seen from both the FP and PF models that the leak is located in the pipeline interval represented by the variables $\Delta DPDL_{3,FP}$ and $\Delta DPDL_{3,PF}$. As mentioned, one or more types of machine inspection (e.g., computing device inspection, etc.) may be implemented such as, for example, edge detection, line detection, pattern recognition, etc.). As an example, a plot may be considered a two-dimensional domain where features in the domain may be identified via one or more types of algorithms (e.g., consider use of one or more image processing algorithms, which may implement filtering, pattern recognition, etc.). As mentioned, a visual inspection by an operator may discern a pattern such as a slope discontinuity, etc.

As mentioned, a method such as the method 700 of Fig. 7 can include determining a location of a fluid leak based at least in part on detecting a difference in slope between at least a portion of a measurement information-based pressure profile and at least a portion of a simulated information-based pressure profile with respect to a distance metric of a hydrocarbon fluid production network. Such a method may implement one or more of the example approaches explained with respect to the plots 1100 and/or 1200 of Figs. 11 and 12, and/or as explained below, etc.

As an example, a more detailed calculation of the leak location can be performed, for example, once a pipeline interval has been identified as including a leak. For example, consider the following:

If $\Delta DPDL_{i,FP}$ is close to 0 (upstream difference in pressure profile slopes is ~0) the leak is located towards the end of the pipeline interval;
If $\Delta DPDL_{i;FP}$ is close to $\Delta DPDL_{av,ds,FP}$ (average of downstream difference in FP and field pressure profile slopes) the leak is located early in the pipeline interval;
If $\Delta DPDL_{i,PF}$ is close to 0 (downstream difference in pressure profile slopes is ~0) the leak is located early in the pipeline interval; and
If $\Delta DPDL_{i,PF}$ is close to $\Delta DPDL_{av,ds,PF}$ (average of downstream difference in PF and field pressure profile slopes) the leak is located towards the end of the pipeline interval.

As an example, several different combinations of the $\Delta DPDL_{i,FP}$ and $\Delta DPDL_{i,PF}$ variables may be used. Which of the proposed alternatives that are selected may depend on project specific data, such as how many intermediate pressure measurements are available in the pipeline. The following alternatives may be implemented (e.g., alternatively and/or additionally to one another and/or one or more other approaches):

Alternative 1: Leak location estimation based on the FP model $\Delta DPDU_{i,FP}$;
Alternative 2: Leak location estimation based on the PF model $\Delta DPDL_{i,PF}$; and/or
Alternative 3 and 4: Leak location estimation based on combinations of the FP model $\Delta DPDL_{i,FP}$ and the PF model $\Delta DPDL_{i,PF}$.

As an example, a more accurate location of a leak may be estimated by Alternative 1:

$$L_{leak} = L_i + (L_{i+1} - L_i)\left(\frac{\Delta DPDL_{av,ds,FP} - \Delta DPDL_{i,FP}}{\Delta DPDL_{av,ds,FP}}\right) \quad (3)$$

Alternative 2:

$$L_{leak} = L_i + (L_{i+1} - L_i)\left(\frac{\Delta DPDL_{i,PF}}{\Delta DPDL_{av,us,PF}}\right) \quad (4)$$

Alternative 3:

$$L_{leak} = L_i + (L_{i+1} - L_i)\left(\frac{\Delta DPDL_{av,ds,FP} - \Delta DPDL_{i,FP}}{\Delta DPDL_{av,ds,FP} - \Delta DPDL_{av,ds,PF}}\right) \quad (5)$$

Alternative 4:

$$L_{leak} = L_i + (L_{i+1} - L_i)\left(\frac{\Delta DPDL_{i,PF}}{\Delta DPDL_{av,us,PF} - \Delta DPDL_{av,us,FP}}\right) \quad (6)$$

where

$L_{leak}$= leak location in terms of length from start of pipeline
$L_i$ = length from start of pipeline to start of interval i
$L_{i+1}$ = length from start of pipeline to end of interval i
$\Delta DPDL_{i,FP}$ = difference in pressure profile slope between the FP model and the field for pipeline interval i
$\Delta DPDL_{i,PF}$ = difference in pressure profile slope between the PF model and the field for pipeline interval i
$\Delta DPDL_{av,ds,FP}$ = average difference in pressure profile slopes between the FP model and the field in the pipeline intervals downstream the identified leaking pipeline interval
$\Delta DPDL_{av,ds,PF}$ = average difference in pressure profile slopes between the PF model and the field in the pipeline intervals downstream the identified leaking pipeline interval
$\Delta DPDL_{av,us,FP}$ = average difference in pressure profile slopes between the FP model and the field in the pipeline intervals upstream the identified leaking pipeline interval
$\Delta DPDL_{av,us,PF}$ = average difference in pressure profile slopes between the PF model and the field in the pipeline intervals upstream the identified leaking pipeline interval

As to Alternatives 1 and 2 compared to Alternatives 3 and 4, one of the detection models may be used to be operational in order to provide a location estimate. However, as shown above, there is an assumption that all $\Delta DPDL_i$

~ 0 in a no leak condition which introduces a corresponding condition that the OLGA model is quite accurately calibrated against field pressure measurements along the pipeline. One or more OLGA models can be calibrated against field measurements at regular intervals, but the model may drift away from field measurements between calibration campaigns. In this case, the accuracy of leak location estimates may be affected. As an example, a method can include recalibration of one or more OLGA models (e.g., and/or one or more other suitable models).

As to Alternatives 3 and 4 compared to Alternatives 1 and 2, the condition that $\Delta DPDL_i \sim 0$ in a no leak condition is not present in order to provide an accurate leak location estimate. Alternatives 3 and 4 utilize the fact that if the model has drifted away from the field measurements, the absolute value of $\Delta DPDL_{FP,i} = \Delta DPDL_{PF,i}$ in a no leak condition. Hence, by applying Alternative 3 or Alternative 4, robustness of a leak location estimate can be improved, compared to Alternative 1 and Alternative 2.

As mentioned, a location uncertainty algorithm may be implemented for determining one or more uncertainties in an estimated leak location. The calculation of the leak location (Equations 3, 4, 5 and 6) can be expected to give accurate results when the system is in steady state (i.e., when the $\Delta DPDLi$ are close to constant functions of time). However, for example, when a leak occurs, a fluid production network can dynamically shift from one steady state to another. Hence, during this period the location estimate may be gradually improved upon. As an example, until a fluid production network has reached its new steady state, there can be an uncertainty associated with the location calculation.

Consider the following definition:

$$s(t) = \max_i \frac{\partial \Delta DPDL_i}{\partial t} \quad (7)$$

where large values of $s(t)$ indicates that the fluid production network (e.g., or relevant portion thereof) is in a dynamic state. As an example, a sensible measure of the uncertainty $\chi(t)$ can be obtained by normalizing $s(t)$ as follows:

$$\chi(t) = \frac{s(t)}{\max_{\tau > t_{leak}} s(\tau)} \quad (8)$$

where $t_{leak}$ is the time where the leak occurred. Hence, $\chi(t)$ lies in the range [0,1], where 0 and 1 indicate small and large uncertainty, respectively.

As an example, a method can include performing leak detection and location estimation during one or more shutdowns. For example, when production (e.g., flowing of fluid from one point to another, etc.) is shut down, shutdown may be automatically detected by an LDS in a framework that provides for monitoring of equipment such as, for example, valve status (open/closed) in the field.

During shutdowns, an LDS may switch off leak detection that detect leaks based on difference in flow between the field and simulator modeling and that locates leaks based on difference in pressure drop between the field and simulator modeling.

However, during shutdowns, leaks may be detected based on a difference in pressure between the field and FP and PF detection models. For example, leaks may be located in terms of pipeline interval, based on monitoring of pressure difference between field measurements and the FP and PF detection models and valve status (open/closed).

As an example, detection and location of leaks during shut-in conditions can be handled by an additional algorithm. In such an example, when an LDS detects that a shutdown has occurred in the field, it can optionally automatically activate a shut-in conditions algorithm and, for example, pause the algorithm used for flowing conditions. In such an example, when the LDS detects that the field is being re-started, it can automatically activate the flowing conditions algorithm and pause the shut-in conditions algorithm.

As an example, a method can include implementing one or more strategies for detecting and locating leaks. For example, consider a method that includes using equipment data from equipment such as one or more pumps and/or compressors and/or using one or more field temperature measurements.

As to pumps and/or compressors, for a fluid production network including pumps or compressors, data such as speed and power may be used in order to detect and locate leaks. These data can be used in detection pairs, for example, in a manner similar to that of field flow rate and pressure measurements. As an example, a difference in speed and/or power between a modelled pump and/or compressor in the FP and PF detection models and the actual pump or compressor in the field may occur as a result of a leak.

As to temperature, one or more field temperature measurements may be compared with one or more FP and PF model calculated temperatures in detection pairs, for example, in a manner akin to that for field flow rate and pressure measurements. Temperature information may be useful in deep-water subsea pipelines, where the ambient pressure is higher than the pipeline operating pressure. In such an example, in the event of a leak, seawater ingress into the pipeline may result in a detectable difference in temperature between the field and the FP and PF models. The location of the field temperature measurements may then be used to find the leak location.

Fig. 13 shows an example of a system architecture 1300 that includes various components such as a field data component 1310, a browser application component 1320 (e.g., for mobile, desktop, workstation, etc.), a server hosting component 1338 that hosts a simulator online architecture 1334, which includes a real-time framework 1350 for leak detection and/or leak location estimation, a web/network services component 1360, a database component 1372, a simulator component 1374 (e.g., OLGA, or other(s)), an advisor framework 1376 and a visualization framework 1378. As shown, the server hosting component 1338 is operatively coupled to the field data component 1310 such that the real-time framework 1350 can receive field data as input (e.g., via one or more interfaces) and can transmit simulator online output, which may be utilized to instruction one or more pieces of equipment (e.g., for data acquisition, valve control, location of a leak in the field, etc.). As shown, the browser application component 1320 may be utilized to access one or more features of the system architecture 1300 and, for example, alter, adjust, interact, acquire, monitor, etc. performance of one or more of the components (e.g., components and/or frameworks).

As an example, one or more LDS models can retrieve real-time data from a SCADA/Distributed Control System (DCS)/Process Control System (PCS) via an Object Linking and Embedding (OLE) for Process Control (OPC) Data Access (DA) component (see, e.g., the field data component 1310). In such an example, the SCADA/DCS/PCS system can provide information to an OPC server and the LDS can connect to the SCADA/DCS/PCS system using an OPC client. OLE for Process Control (OPC) can include one or more types of data transportation technologies, which can include those other than OLE (e.g., .NET™ framework, XML, binary-encoded TCP format, etc.).

As to leak detection warnings, alarms and/or identified leak locations, one or more of these can be made available for presentation in a SCADA/DCS/PCS system and/or one or more other systems, etc. As an example, one or more automatic shutdown actions may be configured in a field DCS, for example, based at least in part on one or more leak alarms generated by an LDS.

As an example, a real-time framework can receive and transmit data between an LDS and a SCADA/DCS/PCS system. For example, a RT framework may provide data marshalling between various system components (e.g., a data historian, OLGA or other simulator, one or more visualization frameworks, etc.).

As an example, an LDS can include a data historian component that can provide for storing results generated by the LDS. As an example, a sampling frequency can optionally be configured (e.g., consider a range of approximately 5 second or more (e.g., 15 seconds or more)). As an example, data may be stored for a determined period of time (e.g., a number of years and/or as limited by disk space, etc.). As an example, one or more historical trends may be determined by analysis of data and may be accessible via one or more Graphical User Interfaces (GUIs), for example, as implemented by a browser and/or other application(s).

OASE is a PYTHON® scripting engine and can be, for example, utilized for execution of one or more leak detection and/or location estimation algorithms. Dyno may be utilized as part of a visualization framework (see, e.g., the visualization framework 1378), which may be part of a web user interface system. As an example, a server can host various LDS features and, for example, a web server running one or more user interface applications. As an example, a user interface may be accessed via a web browser application (e.g., INTERNET EXPLORER®, FIREFOX®, SAFARI®, etc.), which can allow one or more users to log in remotely (e.g., depending on IT security policies, etc.).

Figs. 14, 15 and 16 show various graphical user interfaces (GUIs) 1400, 1500 and 1600. Such GUIs may be rendered to a display or a display surface (e.g., via projection, etc.) via execution of instructions by one or more processors. For example, a framework that provides for leak detection can include instructions executable to render one or more of the GUIs 1400, 1500 and 1600, for example, as part of a method, a workflow, etc.

In Fig. 14, the GUI 1400 shows a gas pipeline overview where a leak alarm can be transferred to a SCADA system or other suitable system. As shown, probability information may be rendered to the display, as to a probability of a leak at one or more locations. As an example, an LDS may generate a leak rate estimate and transfer such information to, for example, a SCADA system. As an example, an LDS may provide for land and/or sea operation monitoring.

As shown in the GUI 1400, tabs can be included to be selectable (e.g., via input such as voice, touch, mouse, stylus, etc.). For example, a pane of the GUI may provide for leak information and another pane of the GUI may provide for location information.

Fig. 15 shows the GUI 1500 being associated with the location tab of the GUI 1400 such that the rendered pane switches from leak information to location information. As shown, a plot is rendered in the GUI 1500 that graphically indicates where a leak location is estimated to be located. In the GUIs 1400 and 1500, information may be color coded, for example, where red indicates a leak and where green indicates no leak. As an example, one or more thresholds may be set as to probabilities of a leak that may trigger a transition from green to red or, for example, from red to green after mitigation action(s) (e.g., based on data from the field, etc.).

As an example, a SCADA may provide for user input that can instruct an LDS. For example, where a graphic includes a feature or features that may indicate a location of a leak or a possible leak, user input may instruct the LDS to further assess one or more portions of a fluid production network and/or to take one or more other actions (e.g., model revision, etc.).

In Fig. 16, the GUI 1600 shows information pertaining to at least a portion of a fluid production network, which may be, for example, a gas pipeline, an oil pipeline, or a multiphase pipeline. The GUI 1600 shows output of pressure transmitters, which include black for calculated pressure (e.g., calculated by OLGA model) and blue for field measurements. In such an example, a user may confirm via comparison of such numbers as to deviations that may exist for one or more locations of a production network.

As an example, the GUI 1600 can be rendered as part of a method that includes rendering at least one graphical user interface to a display that includes at least one graphic of leak-related information. In such an example, the leak-related information can include a graphic of at least a portion of the fluid production network and a graphic of the determined location of the fluid leak. For example, in Fig. 16, a graphic may be displayed in an interval between valve stations (VS) and/or at a valve station (VS). Over time, where an estimated location becomes more accurate as a fluid production network reaches a new steady-state (e.g., depending on the nature of the leak), such a method may include representing the graphic based at least in part on one or more revised and more accurate estimated locations. As an example, where a vehicle (e.g., truck, drone, submarine, etc.) is deployed to a leak location, the location of the vehicle may be tracked and rendered to a graphical user interface (e.g., as a moving graphic en route to a leak location). As an example, where more than one leak occurs, multiple leak graphics and/or locations may be rendered to a display (e.g., as part of one or more GUIs, etc.).

As an example, a system may provide for monitoring a production network and for leak detection within the production network. For example, such a system can be utilized to find a potential leak and then a leak location and then a leak estimation. As an example, a threshold may be set as to a leak estimation where if a leak estimation is negligible (e.g., indicative of a false positive), an indicator may be rendered with the leak estimate and/or a probability may be assigned based at least in part on a leak estimate compared to a total amount of flow in the pipeline.

As an example, a method can include determining ratios of profiles or other analysis of profiles. As an example, a profile may be a signature where the signature can be compared to a database of signatures and/or information distilled from a plurality of signatures. As an example, a neural network may be utilized to analyze signatures for various scenarios, which can include model-based and/or field scenarios. As an example, a signature can be based at least in part on a value.

As an example, an LDS may analyze a plurality of field measurements from a plurality of locations of a production network where such an analysis may aim to verify whether a leak exists or does not exist.

As an example, an LDS can include analyzing data where the data includes pressure data and one or more other types of data. As an example, an LDS may operate in a pressure mode where pressure information is analyzed and/or a pressure plus mode where pressure information and additional measurement information are analyzed. For example, consider a pressure and temperature mode where pressure and temperature are analyzed for purposes of determining whether a leak may exist in a production network.

As an example, a method can include analyzing pressure with respect to distance along a pipeline that is a pipeline of a production network. In such an example, the pressure may be analyzed at multiple locations along the pipeline where the locations are at particular individual, different distances along the pipeline. As an example, a method can include a coarse mode where a fewer number of locations are analyzed and a fine mode where a larger number of locations are analyzed (e.g., a higher resolution mode).

As an example, a production network can include multiple gas phase pipelines and a liquid phase pipeline.

As an example, an LDS may assess orientation of a pipeline or a portion of a pipeline. For example, such an approach may assess gravity driven flow. As an example, a method can include extracting the influence of gravity or otherwise subtracting or accounting for gravity to allow for focus on pressure-driven flow in a pipeline or a portion of a pipeline. As an example, an LDS may provide an indication of orientation and/or an indication of an amount of gravity driven flow at a location or locations along a pipeline. As an example, elevations of portions of a pipeline may be taken into account or rendered to a display to provide an indication as to an amount of flow influenced by gravity (e.g., in comparison to an expected flow through a portion of a pipeline, etc.).

As an example, if fluid enters a run of pipe which has starting elevation of about 2 m (e.g., relative to some zero point) and it then flows through the pipe, rising and falling, before it exits at an elevation of about 5 m, then the net change in elevation is about 3 m and the result will be a pressure loss due to change in elevation of about 3m fluid head (e.g., which could be converted to units of bar or psi).

As an example, pressure losses can be due to pipe friction where, for example, a pump or pressure source may be sized to produce enough additional fluid head (pressure) to overcome pressure loss due to change in elevation and pressure loss due to pipe friction.

As an example, profiles or signatures may account for orientation with respect to gravity. For example, where a pipeline ascends to reach a peak and then descends, a profile may include an ascending profile portion and a descending profile portion where such portions may be optionally adjusted with respect to elevation changes.

As an example, a method may normalize pressure gradient with respect to gravity. As an example, information may be compared from one side of a location of an expected to leak to another side of the location of the expected leak.

In such an example, gravity and/or elevation may be analyzed for each side.

As an example, an LDS may account for flashing of fluid in a pipeline. As an example, flashing or flash evaporation can involve partial vapor that can occur when a saturated liquid stream undergoes a reduction in pressure. As an example, an LDS may account for rate of flow or velocity of flow in a pipeline. As an example, flow rates and/or velocity may be accounted for in multiphase flow. As an example, at lower flow rate (e.g., slow to medium) may provide greater certainty because for higher flow rates the influence from frictional pressure drop can increase (e.g., also consider as a cause of flashing).

As an example, a change in pressure may be about 10 to 15 percent of overall pressure. As an example, as flow rate increases, a higher flow may correspond to a change in pressure that is about 20 to 25 percent across a pipeline. As an example, compressibility of gas may be taken into account.

As an example, a method can include training a system by performing a number of simulations. For example, consider a method that includes performing about 1,000 simulations or more and analyzing the simulation results. Such results can help to characterize a production network, a pipeline, etc. For example, where measurements and model results are analyzed in real-time, a method can include comparing the measurements and/or the model to simulation results or information derived from simulation results of a large number of simulations. Such an approach may be utilized, for example, in an effort to verify a type and/or a location of a leak.

As an example, where future conditions are known with some amount of certainty for a production network (e.g., due to production curves, etc.), simulations may be performed for such future conditions where hypothetical leaks are introduced to generate simulation results for such expected future conditions in the presence of such hypothetical leaks. As an example, a current state of a production network may be linked to expected future conditions such that corresponding simulation results may be utilized, for example, to estimate risks associated with one or more types of leaks, to verify one or more leaks that may exist as uncovered by an LDS, etc.

As an example, a method can include receiving measurement information from a fluid production network; receiving simulated information from a model-based framework for the fluid production network; and comparing the measurement information and the simulated information to detect a fluid leak in the fluid production network. In such an example, the method can include estimating a location of the fluid leak. As an example, measurement information can be or can include fluid pressure. As an example, measurement information can be or can include fluid pressure and fluid temperature.

As an example, a method may be implemented at least in part by a system such as, for example, the system 450 of Fig. 4. As an example, a system can include instructions stored in memory that are executable by one or more processors. As an example, a system may include and/or be operatively coupled to one or more displays. As an example, an interface of an LDS may be operatively coupled to a data transmission system that may be operatively coupled to a control system that can control and/or monitor at least a portion of a fluid production network. As an example, a SCADA system can include one or more displays. As an example, a display may render live images and/or sounds from a site. For example, equipment may be present at a site that can transmit such live images and/or sounds. As an example, such equipment may include one or more drones. For example, a drone may receive an instruction to position itself at a location where a leak may be suspected based on an analysis of information. In such an example, data (e.g., images, sound, local sensor communications, etc.) acquired and transmitted by the drone may allow for assessing the site as to a possible leak, for example, to confirm a leak or no leak and/or to assess a leak (e.g., per leak-related information, etc.). As an example, equipment at a leak site may assess a leak as to fluid (e.g., liquid and/or gas), amount of leakage, rate of leakage, type of issue that resulted in the leak, etc.

As an example, a fluid leak can be a liquid fluid leak and/or a gas fluid leak. As an example, a fluid leak can be a multiphase fluid leak. As an example, a leak may exist in a wall of a pipeline, at a joint between sections of pipe of a pipeline, at equipment, etc.

As an example, a fluid production network can include a plurality of pipelines (e.g., consider at least one gas pipeline and/or at least one fluid pipeline).

As an example, a method can include estimating a flow rate of a fluid leak.

As an example, a method can include calculating a parameter as the difference in pressure profile slope between measured information and simulated information for a pipeline interval.

As an example, a method can include calculating $\Delta P_{i,c}$ as a simulated pressure difference for pipeline interval i where $\Delta L_{i,c}$ is the length of pipeline interval *i* in a simulation model and where the slope is the pressure difference divided by the length.

As an example, a method can include calculating $\Delta P_{i,m}$ as a measured pressure difference for pipeline interval i where $\Delta L_{i,m}$ is the length of pipeline interval *i* in the fluid production network and where the slope is the pressure difference divided by the length.

As an example, simulated information can be from an OLGA simulation (e.g., as implemented using a computer or computing system).

As an example, a method can include rendering at least one graphical user interface to a display that includes a graphic of leak-related information. As an example, such a GUI may be associated with a SCADA (e.g., operatively coupled to a SCADA system).

As an example, a method can include transmitting leak-related information to a data transmission system that is operatively coupled to a control system for controlling at least a portion of the fluid production network.

As an example, a system can include a processor; memory accessible by the processor; and processor-executable instructions stored in the memory where the instructions include instructions to instruct the system to receive measurement information from a fluid production network; receive simulated information from a model-based framework for the fluid production network; and compare the measurement information and the simulated information to detect a fluid leak in the fluid production network. In such an example, the comparison may include comparing slope of profiles and/or slopes of portions of profiles. As an example, a comparison may include comparing signatures. For example, a profile may be a signature and/or a difference in slope between field data and a model for a portion of two corresponding profiles may be a signature (see, e.g., the plots 1100 and 1200 of Figs. 11 and 12).

As an example, one or more computer-readable storage media can include computer-executable instructions executable by a computer, where the instructions include instructions to: receive measurement information from a fluid production network; receive simulated information from a model-based framework for the fluid production network; and compare the measurement information and the simulated information to detect a fluid leak in the fluid production network. A computer-readable storage medium is not a carrier wave, not a signal and is non-transitory.

In some embodiments, the methods of the present disclosure may be executed by a computing system. Fig. 17 illustrates an example of such a computing system 1700, in accordance with some embodiments. The computing system 1700 may include a computer or computer system 1701-1, which may be an individual computer system 1701-1 or an arrangement of distributed computer systems such as systems 1701-2, 1701-3 and 1701-4. The computer system 1701-1 includes instructions 1702 that are configured to perform various tasks according to some embodiments, such as one or more methods disclosed herein. To perform these various tasks, the instructions 1702 can execute independently, or in coordination with, one or more processors 1704, which is (or are) connected to one or more storage media 1706. The processor(s) 1704 is (or are) also connected to a network interface 1707 to allow the computer system 1701-1 to communicate over a data network 1709 with one or more additional computer systems and/or computing systems, such as 1701-2, 1701-3, and/or 1701-4 (note that computer systems 1701-2, 1701-3 and/or 1701-4 may or may not share the same architecture as computer system 1701-1, and may be located in different physical locations, e.g., computer systems 1701-1 and 1701-2 may be located in a processing facility, while in communication with one or more computer systems such as 1701-3 and/or 1701-4 that are located in one or more data centers, and/or located in varying countries on different continents).

A processor may include a microprocessor, microcontroller, processor module or subsystem, programmable integrated circuit, programmable gate array, or another control or computing device.

The storage media 1706 may be implemented as one or more computer-readable or machine-readable storage media. Note that while in the example embodiment of Fig. 17 storage media 1706 is depicted as within computer system 1701-1, in some embodiments, storage media 1706 may be distributed within and/or across multiple internal and/or external enclosures of computing system 1701-1 and/or additional computing systems. Storage media 1706 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), LUERAY® disks, or other types of optical storage, or other types of storage devices. Note that the instructions discussed above may be provided on one computer-readable or machine-readable storage medium, or alternatively, may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

It may be appreciated that computing system 1700 is an example of a computing system, and that computing system 1700 may have more or fewer components than shown, may combine additional components not depicted in the example embodiment of Fig. 17, and/or computing system 1700 may have a different configuration or arrangement of the components depicted in Fig. 17. The various components shown in Fig. 17 may be implemented in hardware, software, or a combination of both hardware and software, including one or more signal processing and/or application specific integrated circuits.

Further, the steps in the processing methods described herein may be implemented by running one or more functional components in information processing apparatus such as general purpose processors or application specific chips, such as ASICs, FPGAs, PLDs, or other appropriate devices. Such components, combinations of these components, and/or their combination with general hardware may be utilized as part of a system and/or to implement one or more methods.

Geologic interpretations, models, and/or other interpretation aids may be refined in an iterative fashion; this concept is applicable to the methods discussed herein. This may include use of feedback loops executed on an algorithmic basis, such as at a computing device (e.g., computing system 1700, Fig. 17), and/or through manual control by a user who may make determinations regarding whether a given step, action, template, model, or set of curves has become sufficiently accurate for the evaluation of the subsurface three-dimensional geologic formation under consideration.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

Fig. 18 shows components of an example of a computing system 1800 and an example of a networked system 1810. The system 1800 includes one or more processors 1802, memory and/or storage components 1804, one or more input and/or output devices 1806 and a bus 1808. In an example embodiment, instructions may be stored in one or more computer-readable media (e.g., memory/storage components 1804). Such instructions may be read by one or more processors (e.g., the processor(s) 1802) via a communication bus (e.g., the bus 1808), which may be wired or wireless. The one or more processors may execute such instructions to implement (wholly or in part) one or more attributes (e.g., as part of a method). A user may view output from and interact with a process via an I/O device (e.g., the device 1806). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1810. The network system 1810 includes components 1822-1, 1822-2, 1822-3, ... 1822-N. For example, the components 1822-1 may include the processor(s) 1802 while the component(s) 1822-3 may include memory accessible by the processor(s) 1802. Further, the component(s) 1822 may include an I/O device for display and optionally interaction with a method. The network may be or include the Internet, an intranet, a cellular network, a satellite network, etc.

## Claims

1. A method (700) comprising:

   receiving measurement information from a hydrocarbon fluid production network wherein the measurement information comprises pressure data and fluid flow data (752);
   receiving simulated information from a model-based framework for the hydrocarbon fluid production network that comprises boundary conditions based at least in part on at least a portion of the measurement information (754);
   comparing the measurement information and the simulated information to detect a fluid leak in the hydrocarbon fluid production network (756);
   determining a location of the fluid leak in the hydrocarbon fluid production network (758); and
   outputting the location of the fluid leak in the hydrocarbon fluid production network (760), **characterized by**
   analyzing at least a portion of the measurement information to determine whether the hydrocarbon fluid production network is operating in a steady-state and
   if the hydrocarbon fluid production network approaches a new steady-state after occurrence of the fluid leak: revising the location of the fluid leak such that the determined location of the leak becomes more accurate with respect to time, and
   if the hydrocarbon fluid production network is not operating in a steady-state after the occurrence of the fluid leak: receiving additional measurement information and based at least in part on the additional measurement information, determining a refined location of the fluid leak in the hydrocarbon fluid production network and outputting the refined location of the fluid leak in the hydrocarbon fluid production network.

2. The method of claim 1 wherein the boundary conditions comprise a fluid flow boundary condition at an upstream location that is based on at least a portion of the fluid flow data and a pressure boundary condition at a downstream location that is based on at least a portion of the pressure data wherein the location of the fluid leak is intermediate the upstream location and the downstream location.

3. The method of claim 1 wherein the boundary conditions comprise a pressure boundary condition at an upstream location that is based on at least a portion of the pressure data and a fluid flow boundary condition at a downstream location that is based on at least a portion of the fluid flow data wherein the location of the fluid leak is intermediate the upstream location and the downstream location.

**4.** The method of claim 1 wherein the simulation information comprises at least one of pressure-flow model-based simulation information and flow-pressure model-based simulation information.

**5.** The method of claim 1 wherein the determining a location of the fluid leak comprises detecting a change in slope of a pressure profile of pressure with respect to a distance metric of the hydrocarbon fluid production network.

**6.** The method of claim 1 wherein the determining a location of the fluid leak comprises detecting a difference in slope between at least a portion of a measurement information-based pressure profile and at least a portion of a simulated information-based pressure profile with respect to a distance metric of the hydrocarbon fluid production network.

**7.** The method of claim 1 comprising receiving equipment information wherein the equipment information comprises operational data for at least one piece of equipment of the hydrocarbon fluid production network.

**8.** The method of claim 1 wherein the measurement information comprises temperature data.

**9.** A system (450) comprising:

a processor (456);
memory (458) accessible by the processor (456); and
processor-executable instructions stored in the memory (458) wherein the instructions comprise instructions to instruct the system (450) to perform a method of any of claims 1 to 8.

**10.** One or more computer-readable storage media comprising computer-executable instructions executable by a computer, which, when executed by the computer, cause the computer to perform a method of any of claims 1 to 8.

**Patentansprüche**

**1.** Verfahren (700), das umfasst:

Empfangen von Messinformationen aus einem Kohlenwasserstofffluid-Produktionsnetzwerk, wobei die Messinformationen Druckdaten und Fluidströmungsdaten (752) umfassen;
Empfangen simulierter Informationen aus einem modellbasierten Framework für das Kohlenwasserstofffluid-Produktionsnetzwerk, das Randbedingungen umfasst, die wenigstens teilweise auf wenigstens einem Teil der Messinformationen (754) basieren;
Vergleichen der Messinformationen und der simulierten Informationen, um ein Fluidleck im Kohlenwasserstofffluid-Produktionsnetzwerk (756) zu detektieren;
Ermitteln einer Stelle des Fluidlecks im Kohlenwasserstofffluid-Produktionsnetzwerk (758); und
Ausgeben der Stelle des Fluidlecks im Kohlenwasserstofffluid-Produktionsnetzwerk (760), **gekennzeichnet durch**
Analysieren wenigstens eines Teils der Messinformationen, um zu ermitteln, ob das Kohlenwasserstofffluid-Produktionsnetzwerk in einem stationären Zustand arbeitet, und
falls sich das Kohlenwasserstofffluid-Produktionsnetzwerk nach dem Auftreten des Fluidlecks einem neuen stationären Zustand nähert: Revidieren der Stelle des Fluidlecks, so dass die ermittelte Stelle des Lecks in Bezug auf die Zeit genauer wird, und
falls das Kohlenwasserstofffluid-Produktionsnetzwerk nach dem Auftreten des Fluidlecks nicht in einem stationären Zustand arbeitet: Empfangen weiterer Messinformationen und basierend wenigstens teilweise auf den weiteren Messinformationen, Ermitteln einer präzisierten Stelle des Fluidlecks im Kohlenwasserstofffluid-Produktionsnetzwerk und Ausgeben der präzisierten Stelle des Fluidlecks im Kohlenwasserstofffluid-Produktionsnetzwerk.

**2.** Verfahren nach Anspruch 1, wobei die Randbedingungen eine Fluidströmungsrandbedingung an einer stromaufwärts gelegenen Stelle umfassen, die auf wenigstens einem Teil der Fluidströmungsdaten basiert, und eine Druckrandbedingung an einer stromabwärts gelegenen Stelle, die auf wenigstens einem Teil der Druckdaten basiert, wobei die Stelle des Fluidlecks zwischen der stromaufwärts gelegenen Stelle und der stromabwärts gelegenen Stelle liegt.

3. Verfahren nach Anspruch 1, wobei die Randbedingungen eine Druckrandbedingung an einer stromaufwärts gelegenen Stelle umfassen, die auf wenigstens einem Teil der Druckdaten basiert, und eine Fluidströmungsrandbedingung an einer stromabwärts gelegenen Stelle, die auf wenigstens einem Teil der Fluidströmungsdaten basiert, wobei die Stelle des Fluidlecks zwischen der stromaufwärts gelegenen Stelle und der stromabwärts gelegenen Stelle liegt.

4. Verfahren nach Anspruch 1, wobei die Simulationsinformationen wenigstens eines umfassen aus druckströmungsmodellbasierten Simulationsinformationen und strömungsdruckmodellbasierten Simulationsinformationen.

5. Verfahren nach Anspruch 1, wobei das Ermitteln einer Stelle des Fluidlecks ein Detektieren einer Änderung der Steilheit eines Druckprofils des Drucks in Bezug auf eine Distanzmetrik des Kohlenwasserstofffluid-Produktionsnetzwerks umfasst.

6. Verfahren nach Anspruch 1, wobei das Ermitteln einer Stelle des Fluidlecks ein Detektieren einer Änderung der Steilheit zwischen wenigstens einem Teil eines messinformationsbasierten Druckprofils und wenigstens einem Teil eines simulationsinformationsbasierten Druckprofils in Bezug auf eine Distanzmetrik des Kohlenwasserstofffluid-Produktionsnetzwerks umfasst.

7. Verfahren nach Anspruch 1, umfassend ein Empfangen von Ausrüstungsinformationen, wobei die Ausrüstungsinformationen Betriebsdaten für wenigstens ein Ausrüstungsteil des Kohlenwasserstofffluid-Produktionsnetzwerks umfassen.

8. Verfahren nach Anspruch 1, wobei die Messinformationen Temperaturdaten umfassen.

9. System (450), umfassend:

einen Prozessor (456);
einen Speicher (458), auf den der Prozessor (456) Zugriff hat; und
im Speicher (458) gespeicherte, prozessorausführbare Anweisungen, wobei die Anweisungen Anweisungen dazu umfassen, das System (450) anzuweisen, ein Verfahren nach einem der Ansprüche 1 bis 8 durchzuführen.

10. Ein oder mehr rechnerlesbare Speichermedien, die rechnerausführbare Anweisungen umfassen, die von einem Rechner ausführbar sind, die bei deren Ausführung durch den Rechner bewirken, dass der Rechner ein Verfahren nach einem der Ansprüche 1 bis 8 durchführt.

## Revendications

1. Procédé (700) comprenant :

la réception d'informations de mesure provenant d'un réseau de production de fluides hydrocarbures dans lequel les informations de mesure comprennent des données de pression et des données d'écoulement fluidique (752) ;
la réception d'informations simulées provenant d'un cadre de travail basé sur un modèle destiné au réseau de production de fluides hydrocarbures qui comprend des conditions aux limites basées au moins en partie sur au moins une partie des informations de mesure (754);
la comparaison des informations de mesure et des informations simulées pour détecter une fuite de fluide dans le réseau de production de fluides hydrocarbures (756) ;
la détermination d'un emplacement de la fuite de fluide dans le réseau de production de fluides hydrocarbures (758) ; et
l'émission en sortie de l'emplacement de la fuite de fluide dans le réseau de production de fluides hydrocarbures (760), **caractérisé par**
l'analyse d'au moins une partie des informations de mesure pour déterminer si le réseau de production de fluides hydrocarbures fonctionne à l'état stable et
si le réseau de production de fluides hydrocarbures s'approche d'un nouvel état stable après l'apparition de la fuite de fluide : la révision de l'emplacement de la fuite de fluide de sorte que l'emplacement déterminé de la fuite devient plus précis par rapport au temps et
si le réseau de production de fluides hydrocarbures ne fonctionne pas en état stable après l'apparition de la fuite de fluide : la réception des informations de mesure supplémentaires et basée au moins en partie sur les informations de mesure supplémentaires, la détermination de l'emplacement précisé de la fuite de fluide dans le réseau de production de fluides hydrocarbures et l'émission en sortie de l'emplacement précisé de la fuite de fluide dans le réseau de production de fluides hydrocarbures.

**2.** Procédé selon la revendication 1, dans lequel les conditions aux limites comprennent une condition aux limites d'écoulement de fluide à un emplacement en amont qui est basé sur au moins une partie des données d'écoulement fluidique et une condition aux limites de pression à un emplacement en aval qui est basé sur au moins une partie des données de pression dans lequel l'emplacement de la fuite de fluide est intermédiaire entre l'emplacement en amont et l'emplacement en aval.

**3.** Procédé selon la revendication 1, dans lequel les conditions aux limites comprennent une condition aux limites de pression à un emplacement en amont qui est basé sur au moins une partie des données de pression et une condition aux limites d'écoulement fluidique à un emplacement en aval qui est basé sur au moins une partie des données d'écoulement fluidique dans lequel l'emplacement de la fuite de fluide est intermédiaire entre l'emplacement en amont et l'emplacement en aval.

**4.** Procédé selon la revendication 1, dans lequel les informations de simulation comprennent au moins une parmi les informations de simulation basées sur un modèle de pression-écoulement et les informations de simulation basées sur un modèle d'écoulement-pression.

**5.** Procédé selon la revendication 1, dans lequel la détermination de l'emplacement de la fuite de fluide comprend la détection d'un changement de pente d'un profil de pression de la pression par rapport à une mesure de distance du réseau de production de fluides hydrocarbures.

**6.** Procédé selon la revendication 1, dans lequel la détermination d'un emplacement de la fuite de fluide comprend la détection d'une différence de pente entre au moins une partie d'un profil de pression basé sur les informations de mesure et au moins une partie d'un profil de pression basé sur les informations simulées par rapport à une mesure de distance du réseau de production de fluides hydrocarbures.

**7.** Procédé selon la revendication 1 comprenant la réception des informations relatives aux équipements dans lequel les informations relatives aux équipements comprennent les données opérationnelles destinées à au moins une pièce des équipements du réseau de production de fluides hydrocarbures.

**8.** Procédé selon la revendication 1 dans lequel les informations de mesure comprennent des données de température.

**9.** Système (450) comprenant :
un processeur (456) ;

une mémoire (458) accessible par le processeur (456) ; et
des instructions exécutables du processeur mémorisées dans la mémoire (458) dans lequel les instructions comprennent des instructions pour ordonner au système (450) de réaliser un procédé selon l'une quelconque des revendications 1 à 8.

**10.** Un ou plusieurs supports de stockage lisibles par ordinateur comprenant des instructions exécutables par ordinateur pouvant être exécutées par un ordinateur qui, lorsqu'elles sont exécutées par l'ordinateur, amènent l'ordinateur à réaliser un procédé selon l'une quelconque des revendications 1 à 8.

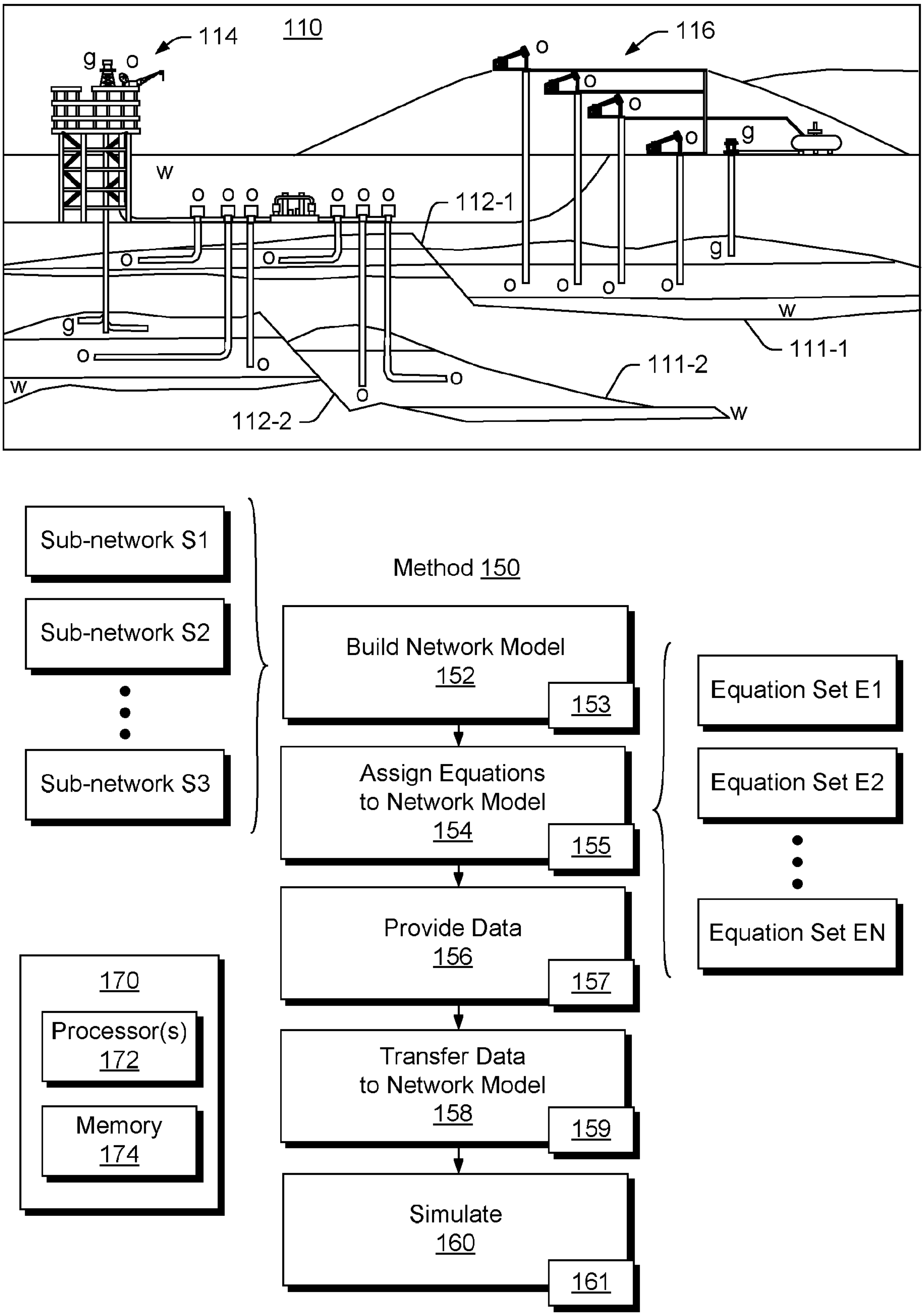
114
110
116
g
o
w
112-1
111-1
111-2
112-2
Sub-network S1
Sub-network S2
Sub-network S3
Method 150
Build Network Model
152
153
Assign Equations
to Network Model
154
155
Provide Data
156
157
Transfer Data
to Network Model
158
159
Simulate
160
161
Equation Set E1
Equation Set E2
Equation Set EN
170
Processor(s)
172
Memory
174

Fig. 1

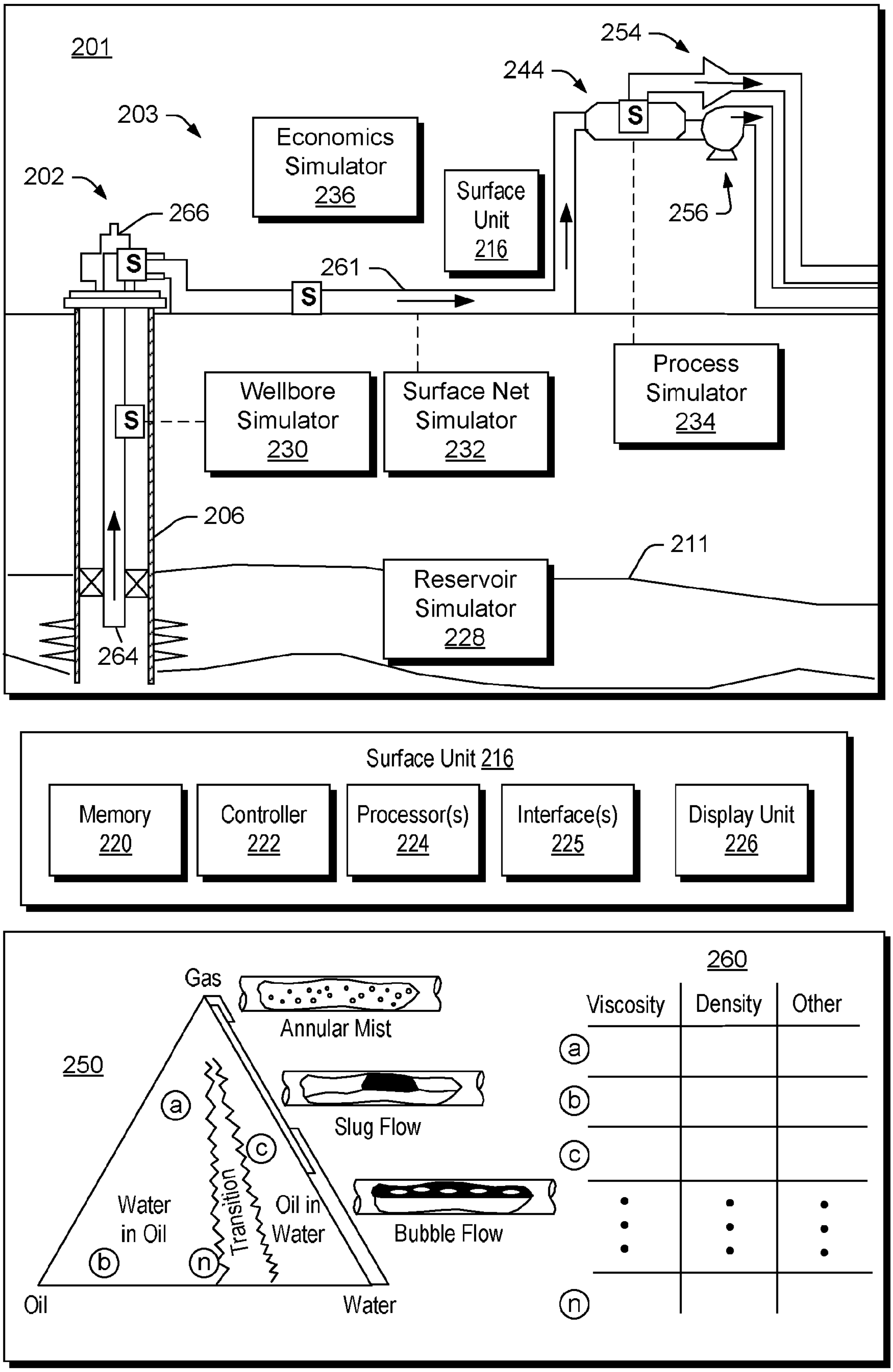
201
203
202
266
Economics Simulator 236
Surface Unit 216
244
254
S
256
261
Wellbore Simulator 230
Surface Net Simulator 232
Process Simulator 234
206
211
Reservoir Simulator 228
264
Surface Unit 216
Memory 220
Controller 222
Processor(s) 224
Interface(s) 225
Display Unit 226
Gas
Annular Mist
250
Slug Flow
Water in Oil
Transition
Oil in Water
Bubble Flow
Oil
Water
260
Viscosity
Density
Other
a
b
c
n

Fig. 2

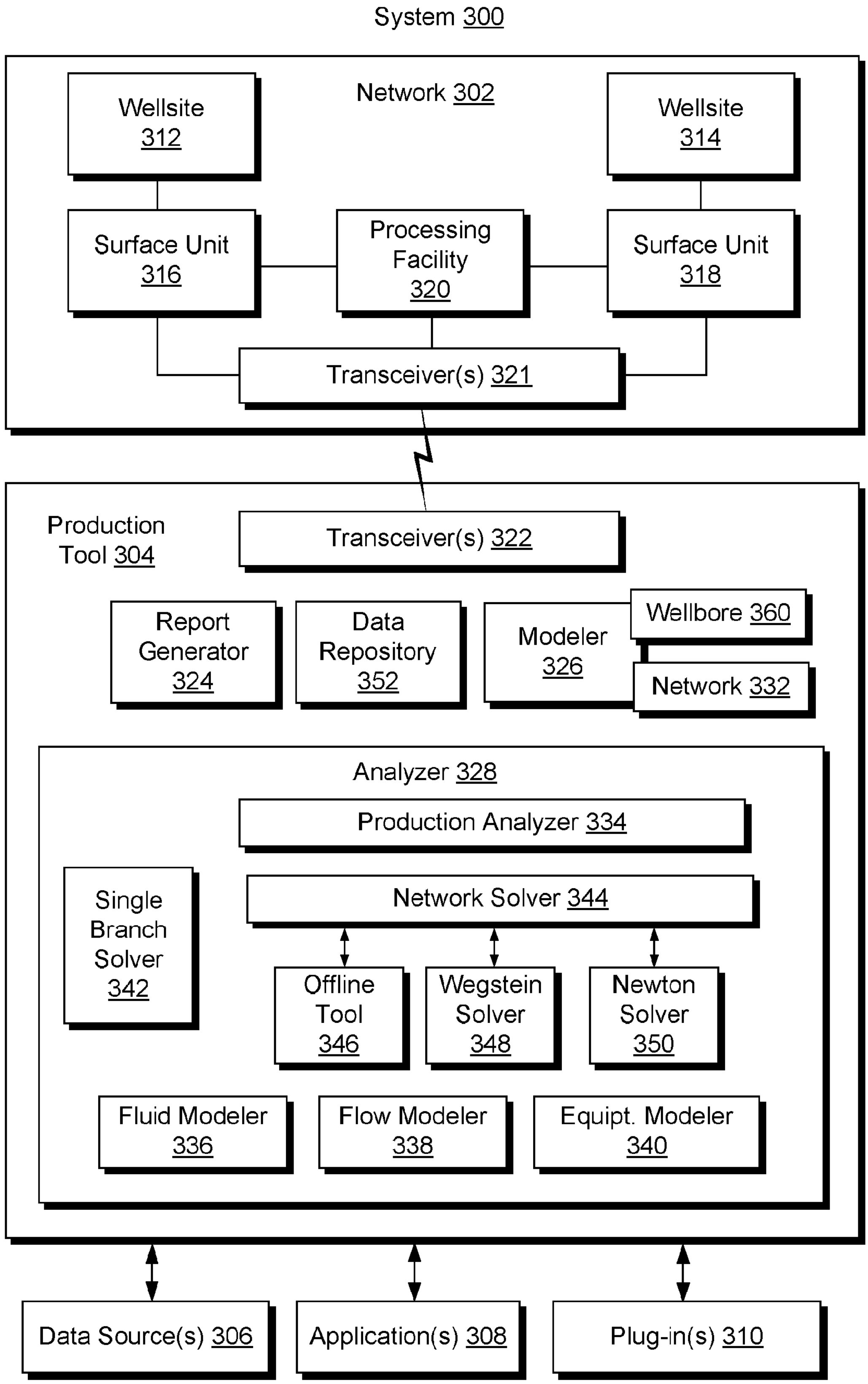
System 300
Network 302
Wellsite 312
Wellsite 314
Surface Unit 316
Processing Facility 320
Surface Unit 318
Transceiver(s) 321
Production Tool 304
Transceiver(s) 322
Report Generator 324
Data Repository 352
Modeler 326
Wellbore 360
Network 332
Analyzer 328
Production Analyzer 334
Single Branch Solver 342
Network Solver 344
Offline Tool 346
Wegstein Solver 348
Newton Solver 350
Fluid Modeler 336
Flow Modeler 338
Equipt. Modeler 340
Data Source(s) 306
Application(s) 308
Plug-in(s) 310

Fig. 3

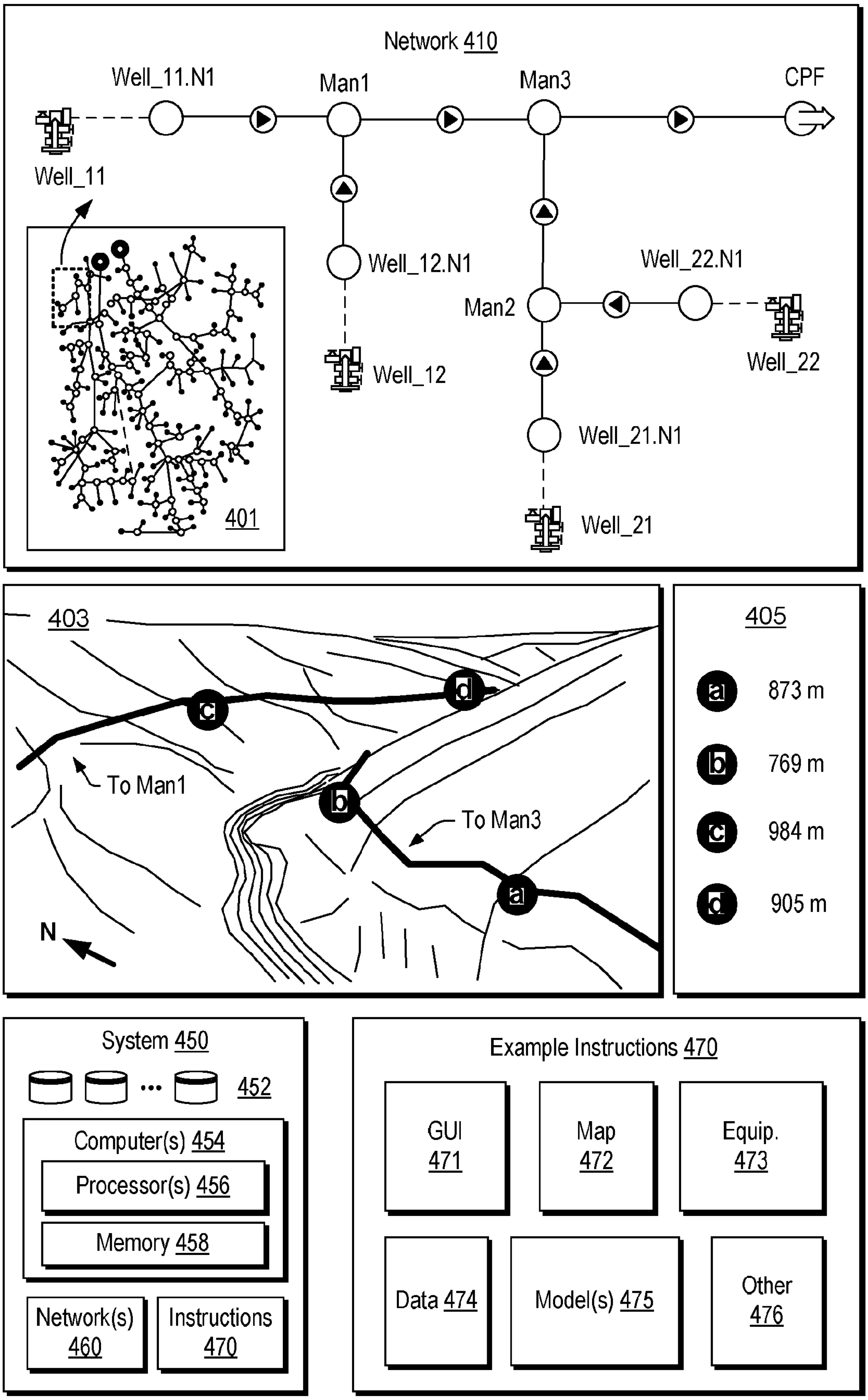
Network 410
Well_11.N1
Man1
Man3
CPF
Well_11
Well_12.N1
Well_22.N1
Man2
Well_12
Well_22
Well_21.N1
Well_21
401
403
To Man1
To Man3
N
405
a 873 m
b 769 m
c 984 m
d 905 m
System 450
452
Computer(s) 454
Processor(s) 456
Memory 458
Network(s) 460
Instructions 470
Example Instructions 470
GUI 471
Map 472
Equip. 473
Data 474
Model(s) 475
Other 476

Fig. 4

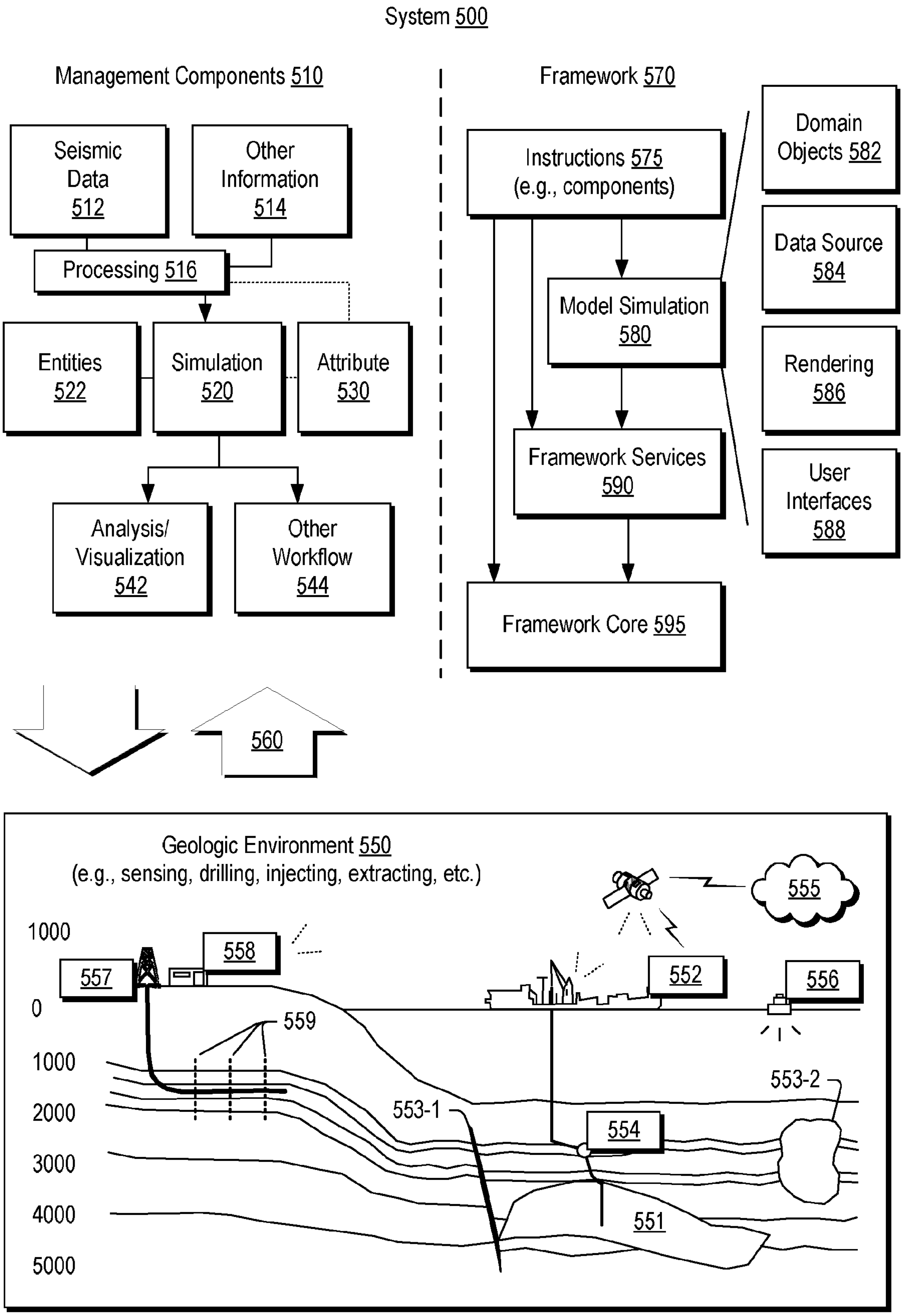
System 500
Management Components 510
Seismic Data 512
Other Information 514
Processing 516
Entities 522
Simulation 520
Attribute 530
Analysis/ Visualization 542
Other Workflow 544
Framework 570
Instructions 575 (e.g., components)
Model Simulation 580
Framework Services 590
Framework Core 595
Domain Objects 582
Data Source 584
Rendering 586
User Interfaces 588
560
Geologic Environment 550
(e.g., sensing, drilling, injecting, extracting, etc.)
1000
0
1000
2000
3000
4000
5000
557
558
559
552
555
556
553-1
553-2
554
551

Fig. 5

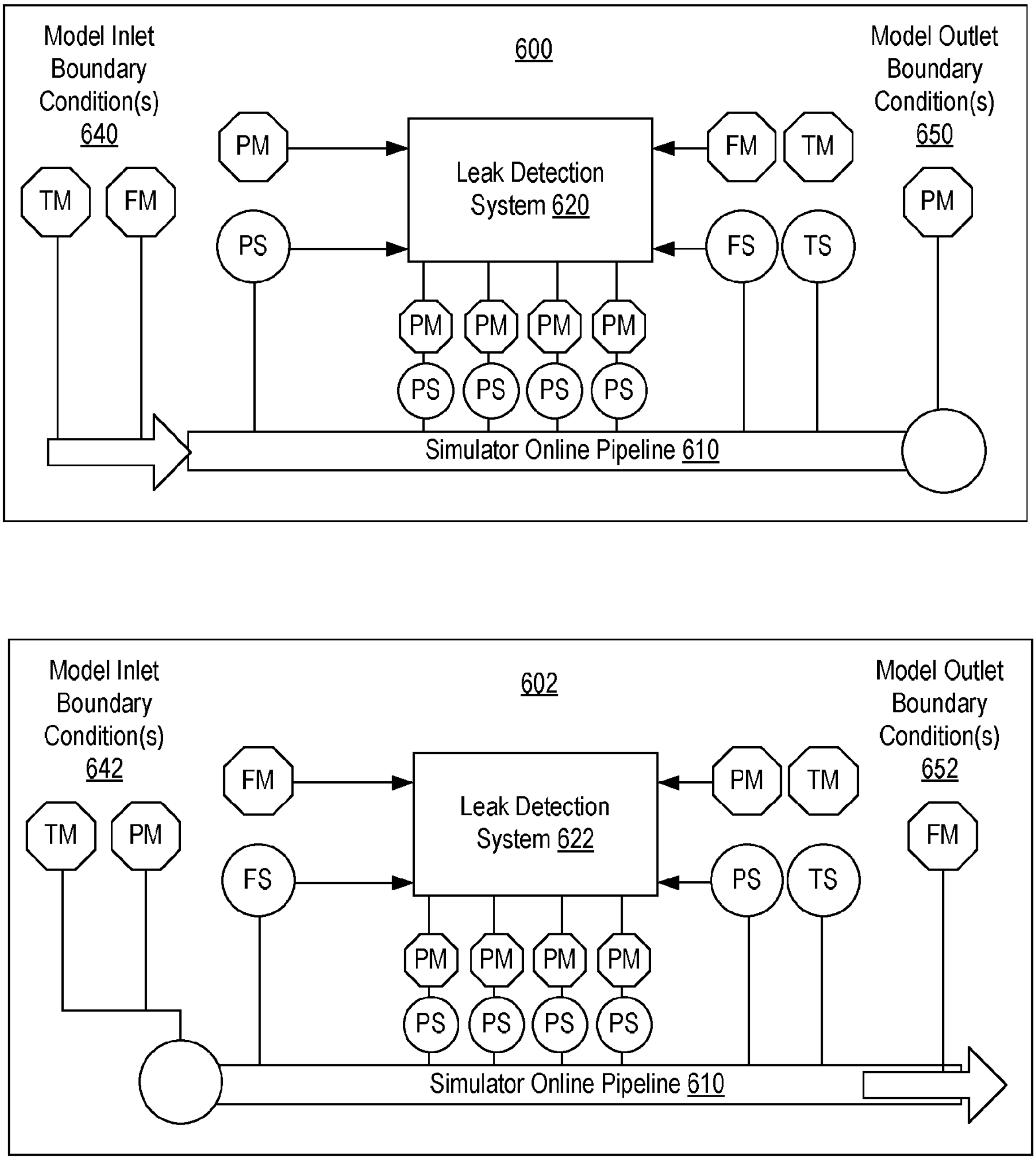
Model Inlet Boundary Condition(s) 640
600
Model Outlet Boundary Condition(s) 650
Leak Detection System 620
PM
PS
FM
TM
FS
TS
PM
TM
FM
PM
PS
Simulator Online Pipeline 610
Model Inlet Boundary Condition(s) 642
602
Model Outlet Boundary Condition(s) 652
Leak Detection System 622
FM
FS
PM
TM
PS
TS
FM
TM
PM
PM
PS
Simulator Online Pipeline 610

Fig. 6

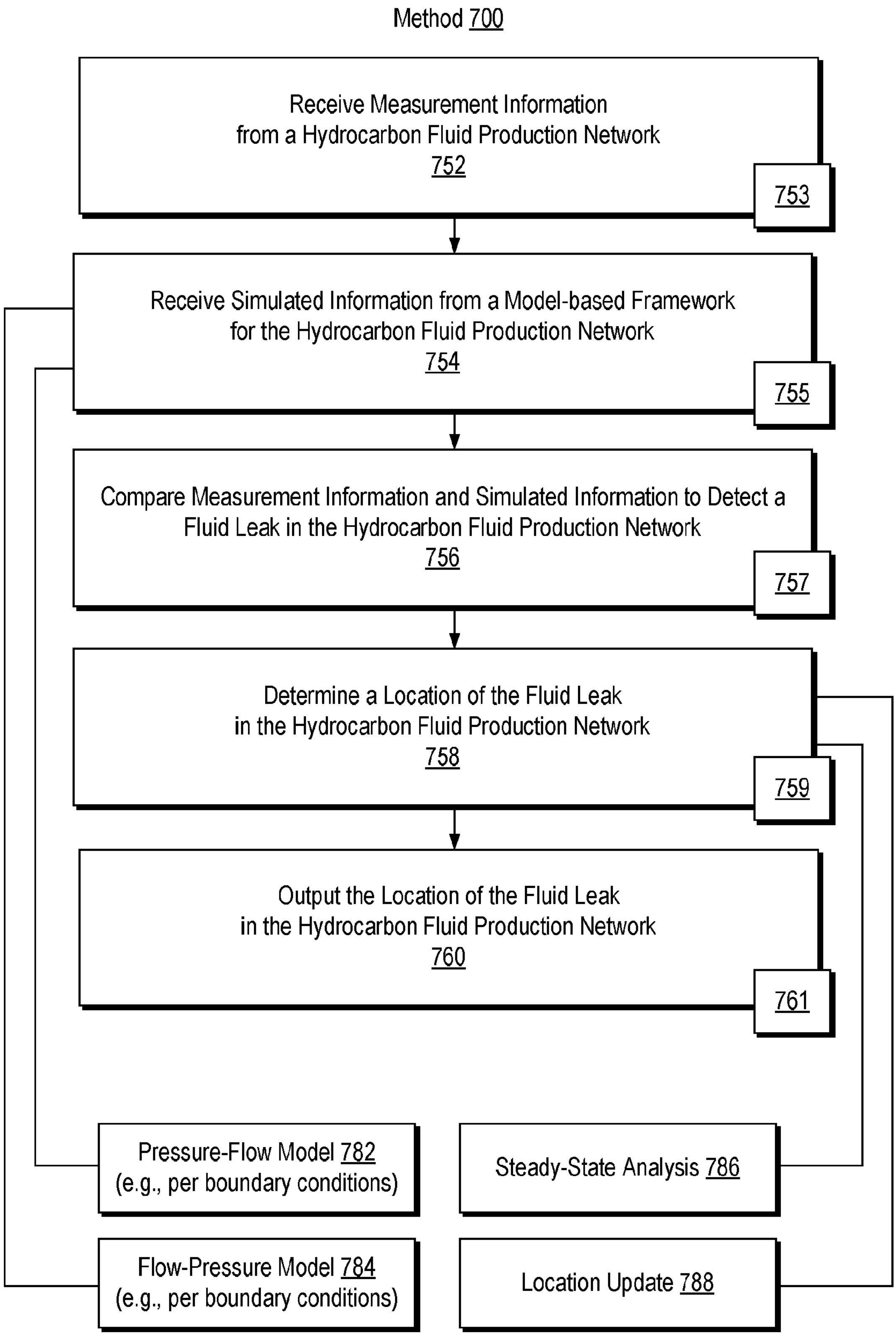
Method 700
Receive Measurement Information from a Hydrocarbon Fluid Production Network 752
753
Receive Simulated Information from a Model-based Framework for the Hydrocarbon Fluid Production Network 754
755
Compare Measurement Information and Simulated Information to Detect a Fluid Leak in the Hydrocarbon Fluid Production Network 756
757
Determine a Location of the Fluid Leak in the Hydrocarbon Fluid Production Network 758
759
Output the Location of the Fluid Leak in the Hydrocarbon Fluid Production Network 760
761
Pressure-Flow Model 782 (e.g., per boundary conditions)
Steady-State Analysis 786
Flow-Pressure Model 784 (e.g., per boundary conditions)
Location Update 788

Fig. 7

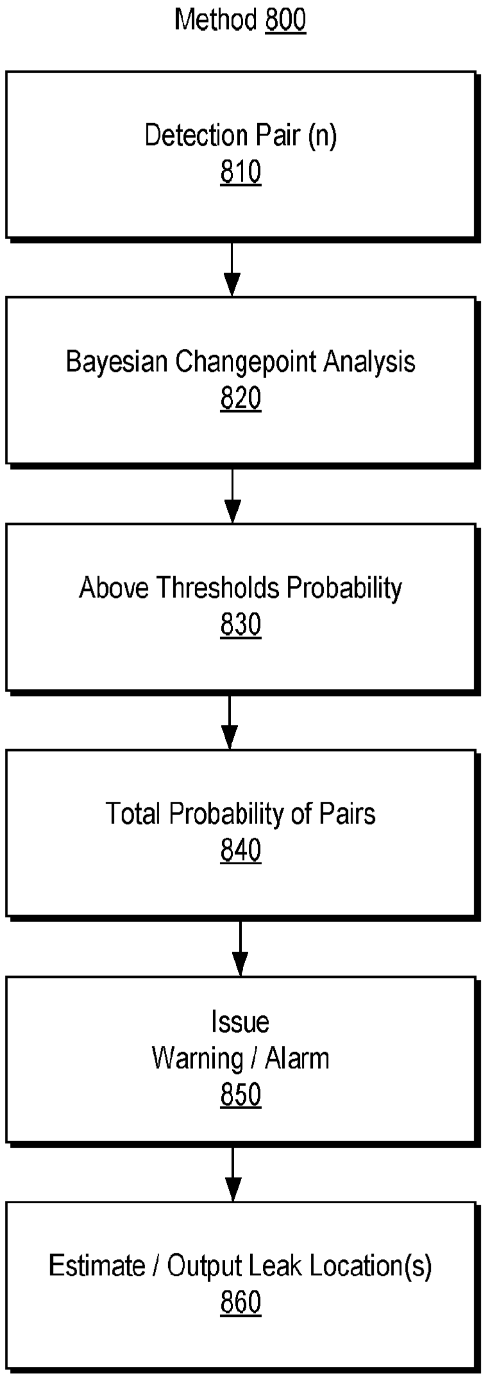
Method 800
Detection Pair (n)
810
Bayesian Changepoint Analysis
820
Above Thresholds Probability
830
Total Probability of Pairs
840
Issue
Warning / Alarm
850
Estimate / Output Leak Location(s)
860

Fig. 8

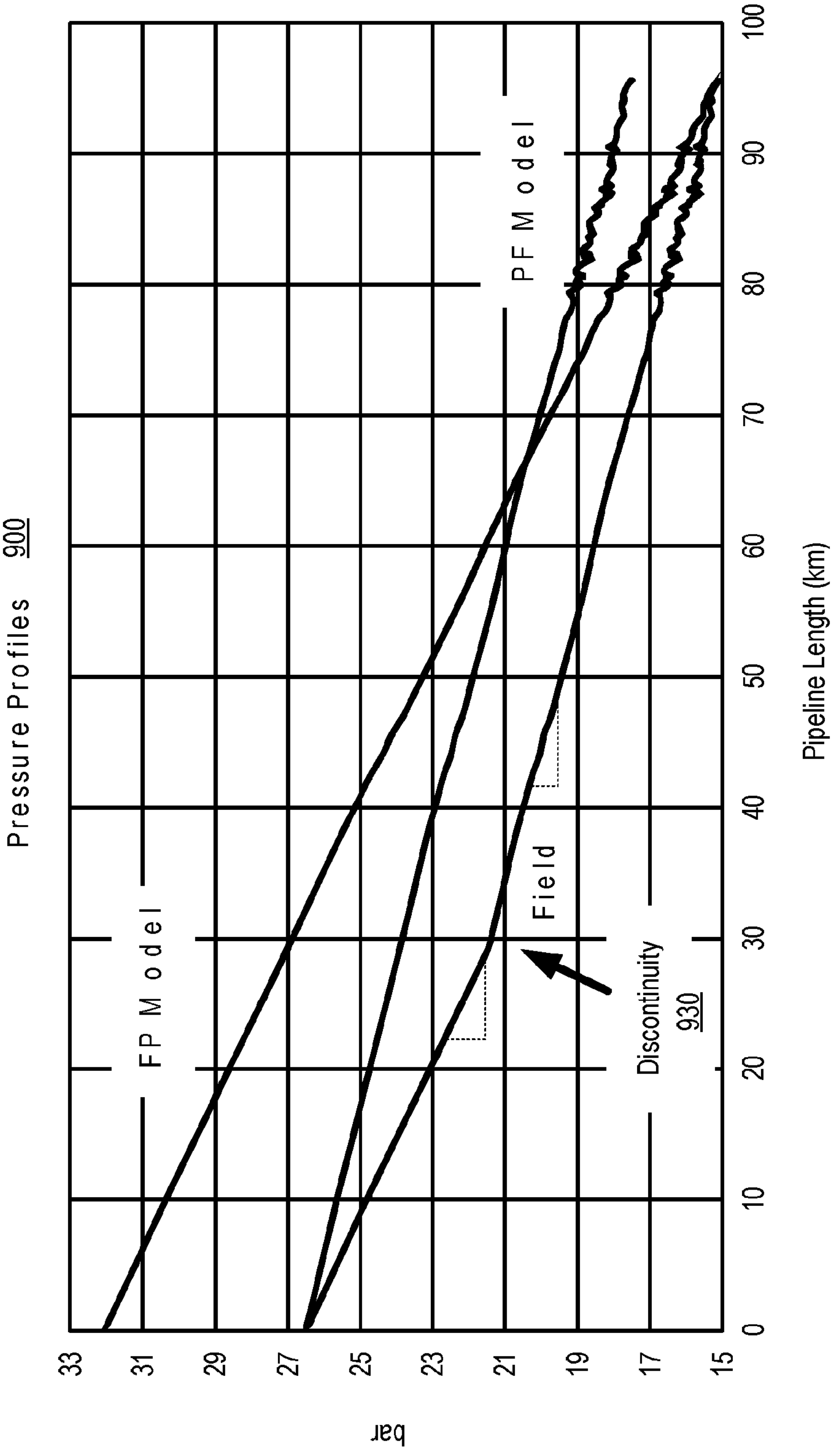

Pressure Profiles 900
F P M o d e l
P F M o d e l
F i e l d
Discontinuity
930
bar
33
31
29
27
25
23
21
19
17
15
0
10
20
30
40
50
60
70
80
90
100
Pipeline Length (km)


Fig. 9

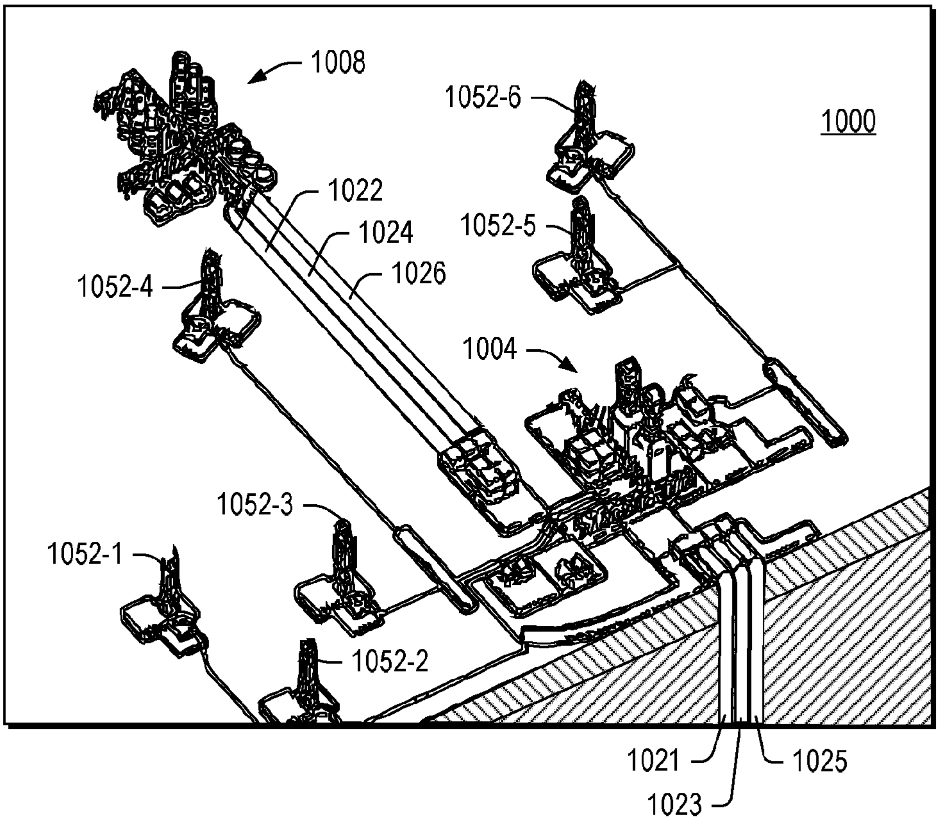
1008
1052-6
1000
1022
1024
1052-5
1026
1052-4
1004
1052-3
1052-1
1052-2
1021
1025
1023

Fig. 10

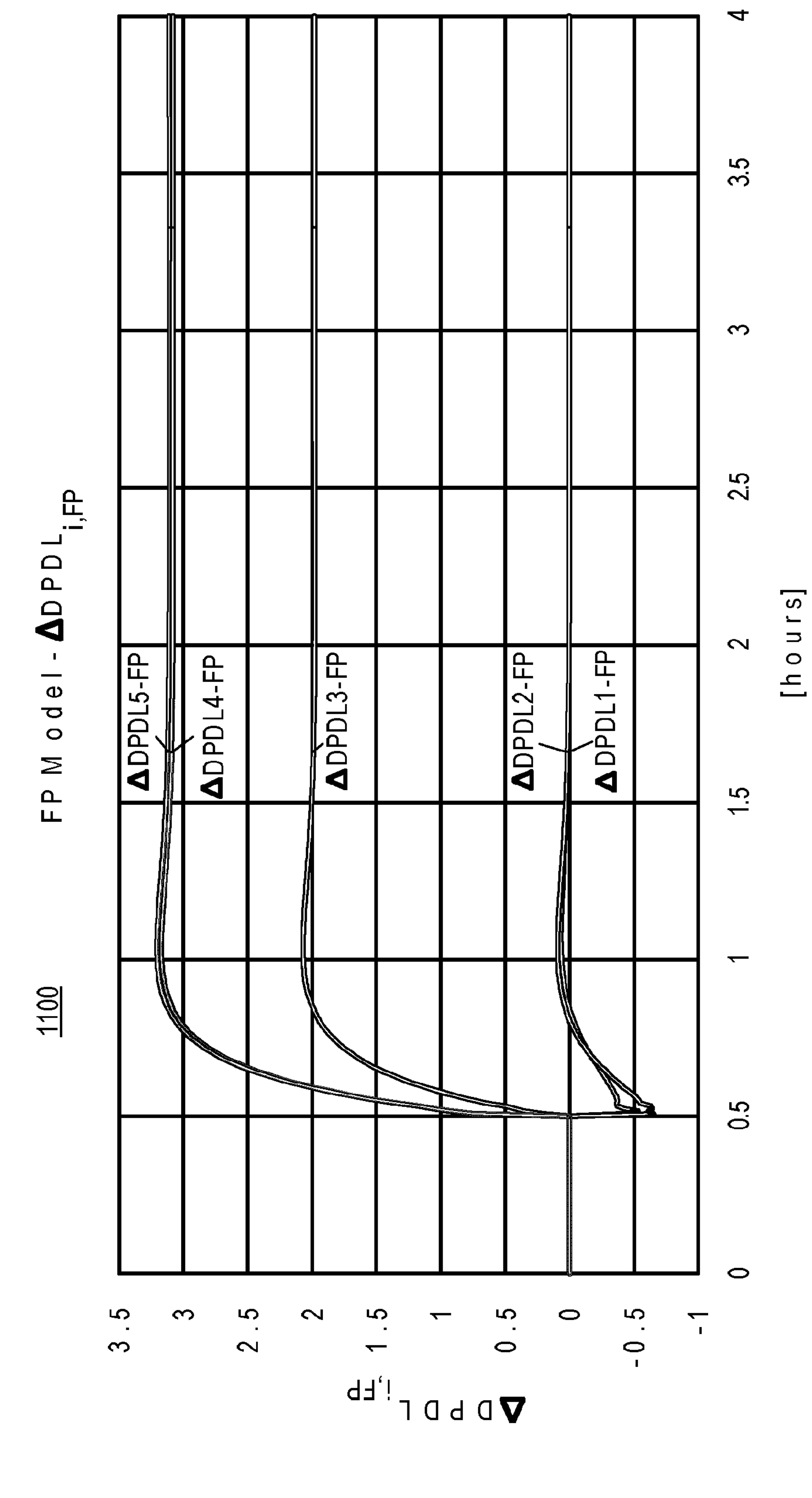
1100
FP Model - ΔDPDL i,FP
ΔDPDL5-FP
ΔDPDL4-FP
ΔDPDL3-FP
ΔDPDL2-FP
ΔDPDL1-FP
ΔDPDL i,FP
3.5
3
2.5
2
1.5
1
0.5
0
-0.5
-1
0
0.5
1
1.5
2
2.5
3
3.5
4
[hours]

Fig. 11

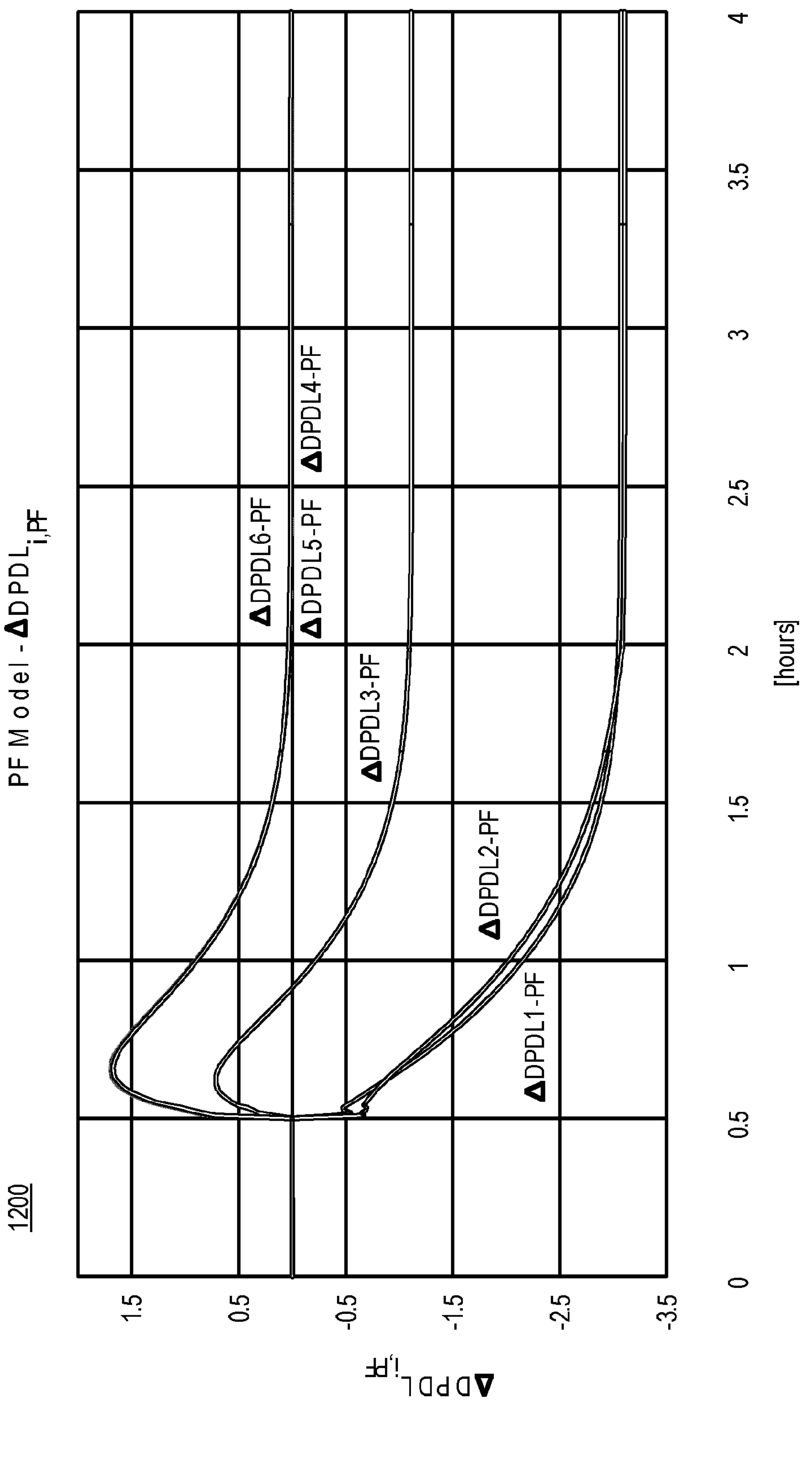
1200
PF Model - ΔDPDL i,PF
ΔDPDL6-PF
ΔDPDL5-PF
ΔDPDL4-PF
ΔDPDL3-PF
ΔDPDL2-PF
ΔDPDL1-PF
ΔDPDL i,PF
1.5
0.5
-0.5
-1.5
-2.5
-3.5
0
0.5
1
1.5
2
2.5
3
3.5
4
[hours]

Fig. 12

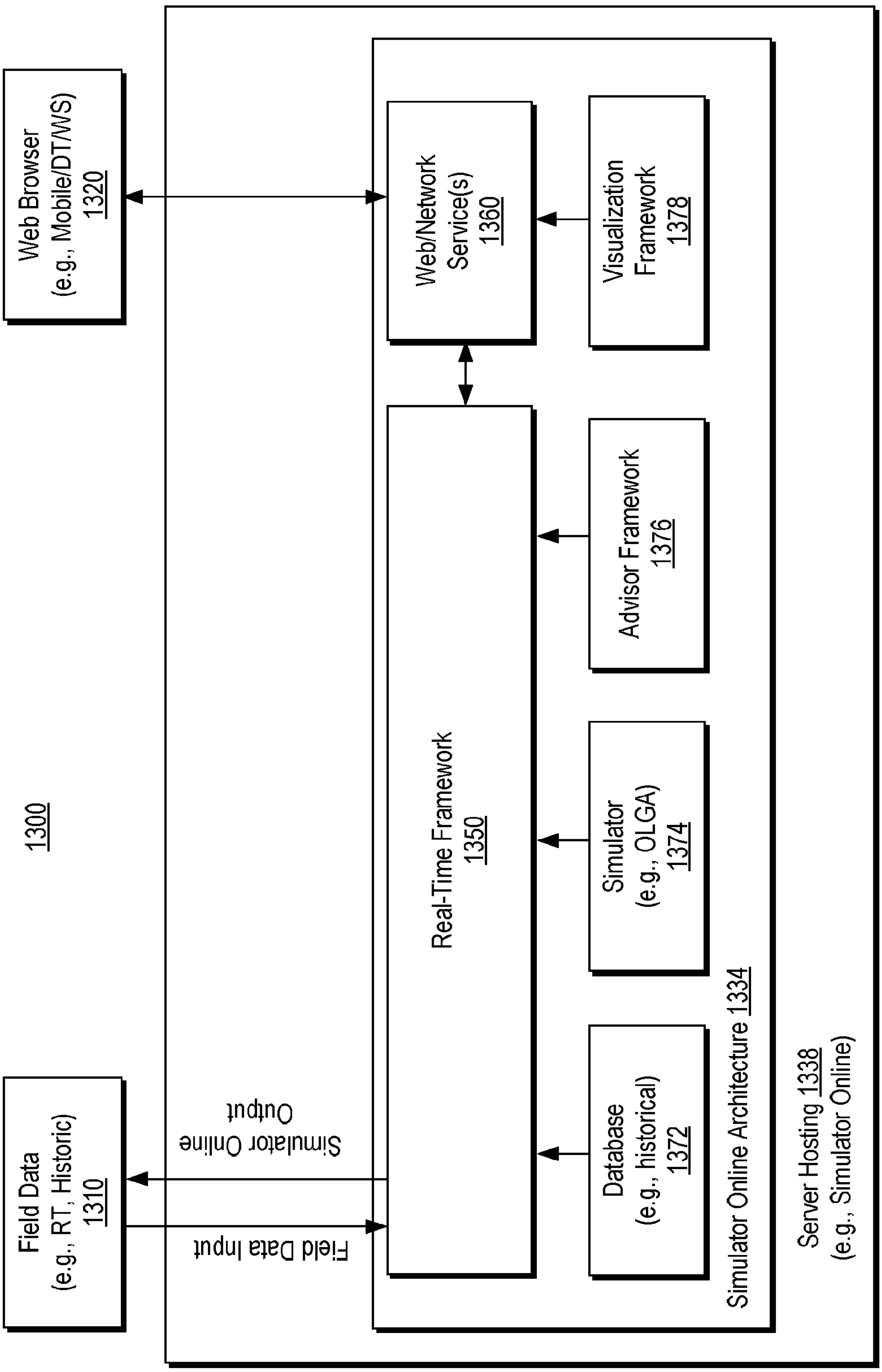
1300
Web Browser (e.g., Mobile/DT/WS) 1320
Field Data (e.g., RT, Historic) 1310
Field Data Input
Simulator Online Output
Web/Network Service(s) 1360
Visualization Framework 1378
Real-Time Framework 1350
Advisor Framework 1376
Simulator (e.g., OLGA) 1374
Database (e.g., historical) 1372
Simulator Online Architecture 1334
Server Hosting 1338 (e.g., Simulator Online)

Fig. 13

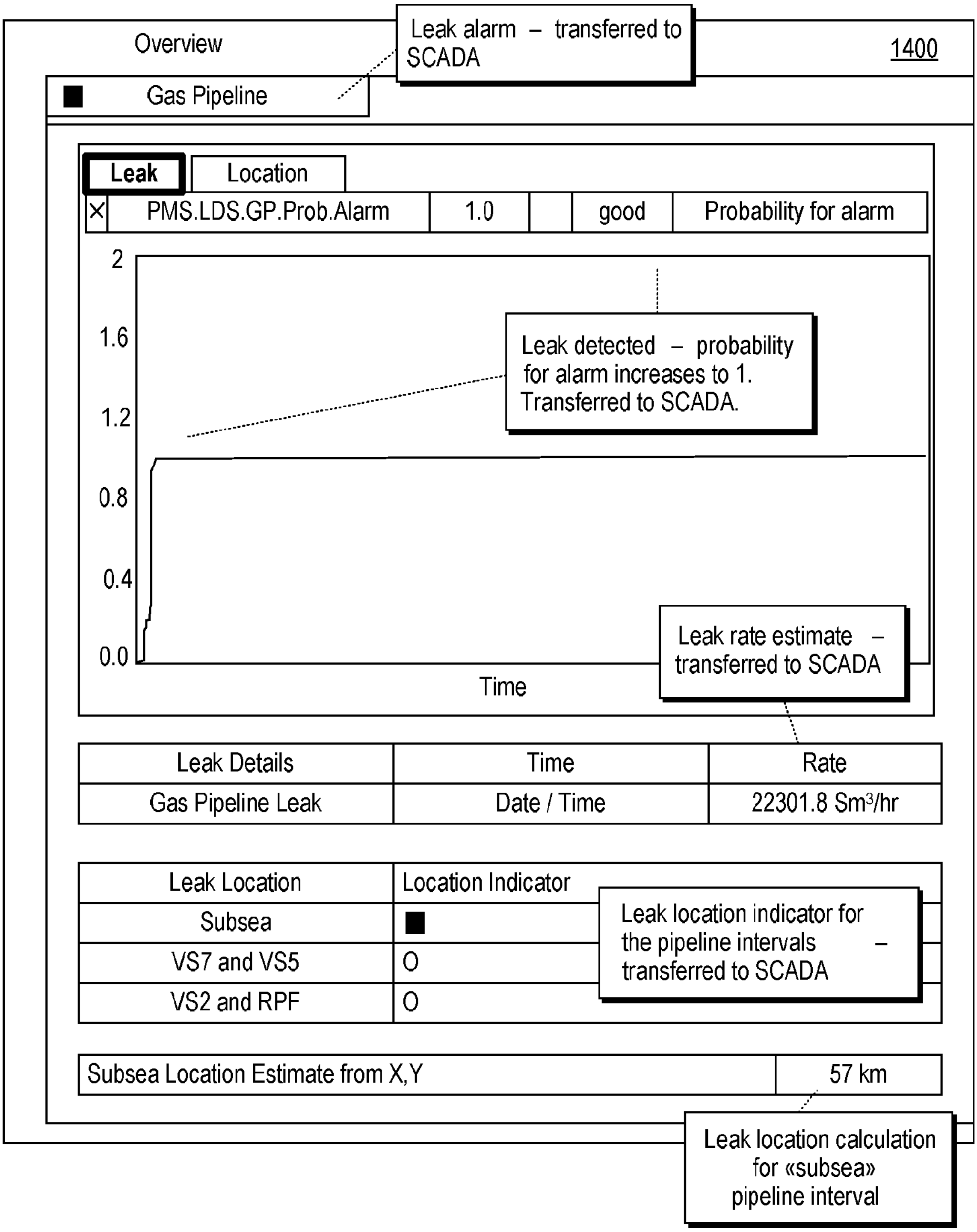
Overview
Leak alarm – transferred to SCADA
1400
Gas Pipeline
Leak
Location
PMS.LDS.GP.Prob.Alarm
1.0
good
Probability for alarm
2
1.6
1.2
0.8
0.4
0.0
Leak detected – probability for alarm increases to 1. Transferred to SCADA.
Leak rate estimate – transferred to SCADA
Time
Leak Details
Time
Rate
Gas Pipeline Leak
Date / Time
22301.8 Sm³/hr
Leak Location
Location Indicator
Subsea
VS7 and VS5
VS2 and RPF
Leak location indicator for the pipeline intervals – transferred to SCADA
Subsea Location Estimate from X,Y
57 km
Leak location calculation for «subsea» pipeline interval

Fig. 14

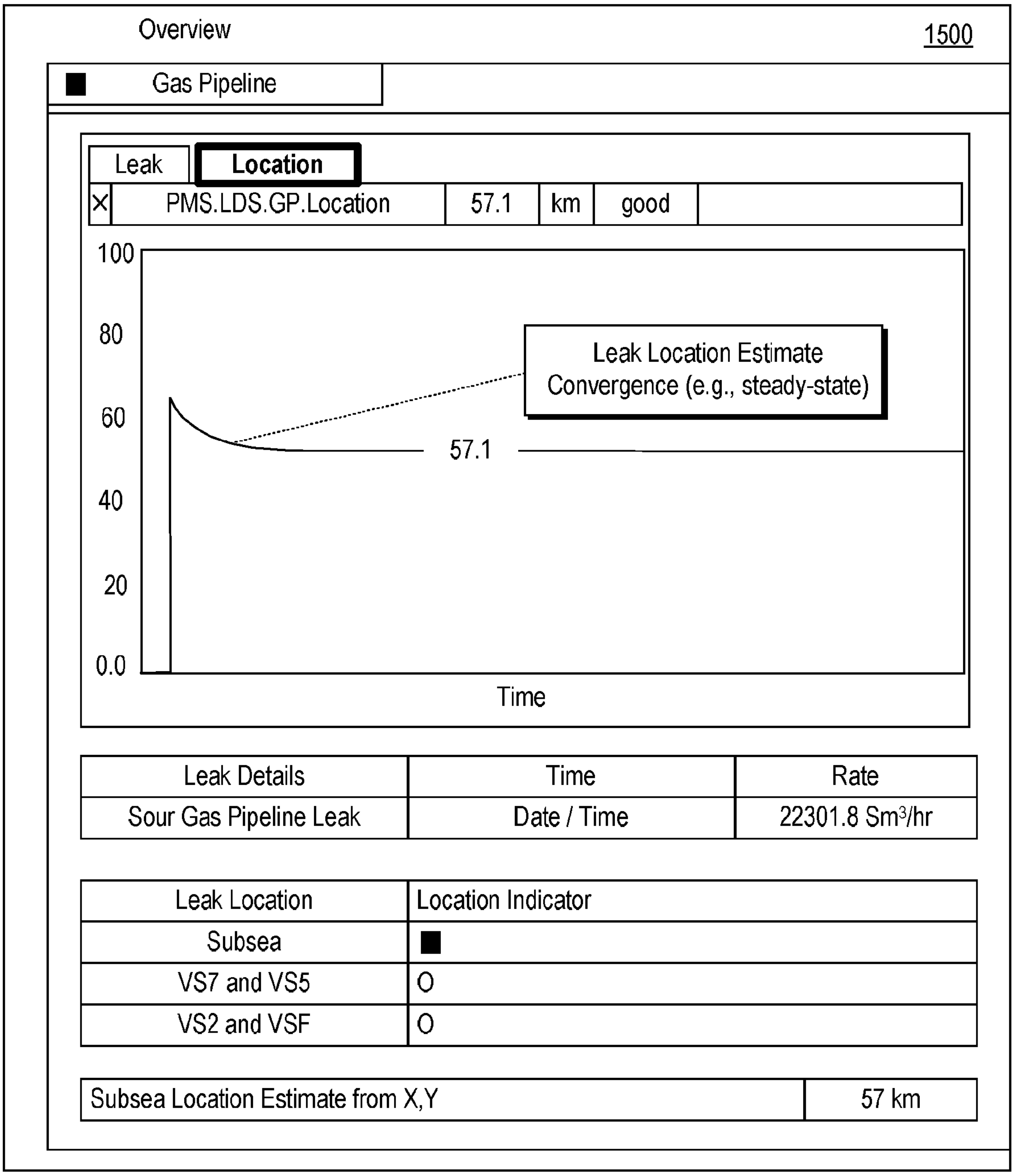
Overview
1500
Gas Pipeline
Leak
Location
PMS.LDS.GP.Location
57.1
km
good
100
80
60
40
20
0.0
Leak Location Estimate
Convergence (e.g., steady-state)
57.1
Time
Leak Details
Time
Rate
Sour Gas Pipeline Leak
Date / Time
22301.8 Sm³/hr
Leak Location
Location Indicator
Subsea
VS7 and VS5
O
VS2 and VSF
O
Subsea Location Estimate from X,Y
57 km

Fig. 15

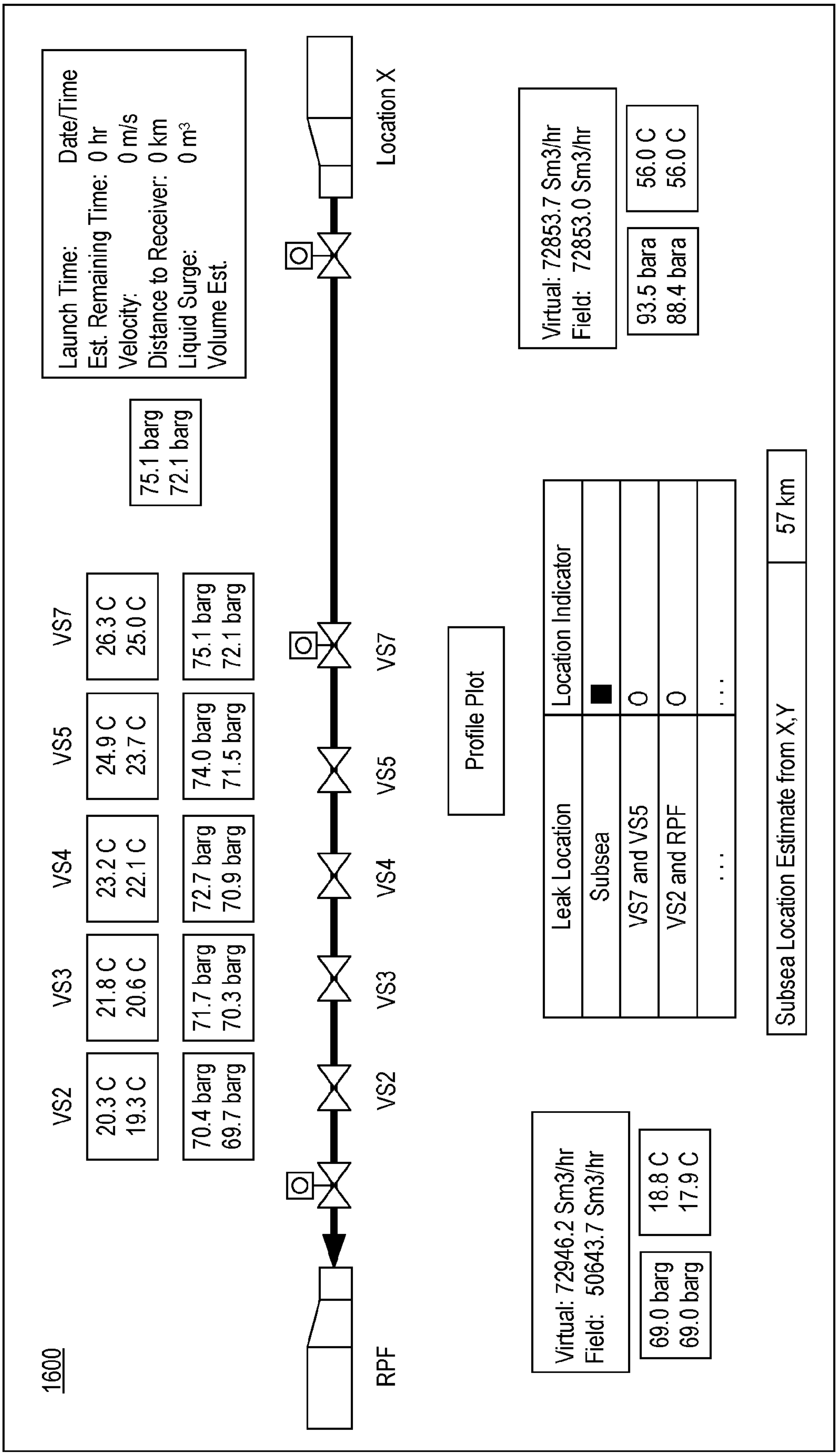
1600
Launch Time: Date/Time
Est. Remaining Time: 0 hr
Velocity: 0 m/s
Distance to Receiver: 0 km
Liquid Surge: 0 m³
Volume Est.
75.1 barg
72.1 barg
VS2
20.3 C
19.3 C
70.4 barg
69.7 barg
VS3
21.8 C
20.6 C
71.7 barg
70.3 barg
VS4
23.2 C
22.1 C
72.7 barg
70.9 barg
VS5
24.9 C
23.7 C
74.0 barg
71.5 barg
VS7
26.3 C
25.0 C
75.1 barg
72.1 barg
RPF
VS2
VS3
VS4
VS5
VS7
Location X
Profile Plot
Virtual: 72946.2 Sm3/hr
Field: 50643.7 Sm3/hr
69.0 barg
69.0 barg
18.8 C
17.9 C
Leak Location
Location Indicator
Subsea
VS7 and VS5
VS2 and RPF
...
Virtual: 72853.7 Sm3/hr
Field: 72853.0 Sm3/hr
93.5 bara
88.4 bara
56.0 C
56.0 C
Subsea Location Estimate from X,Y
57 km

Fig. 16

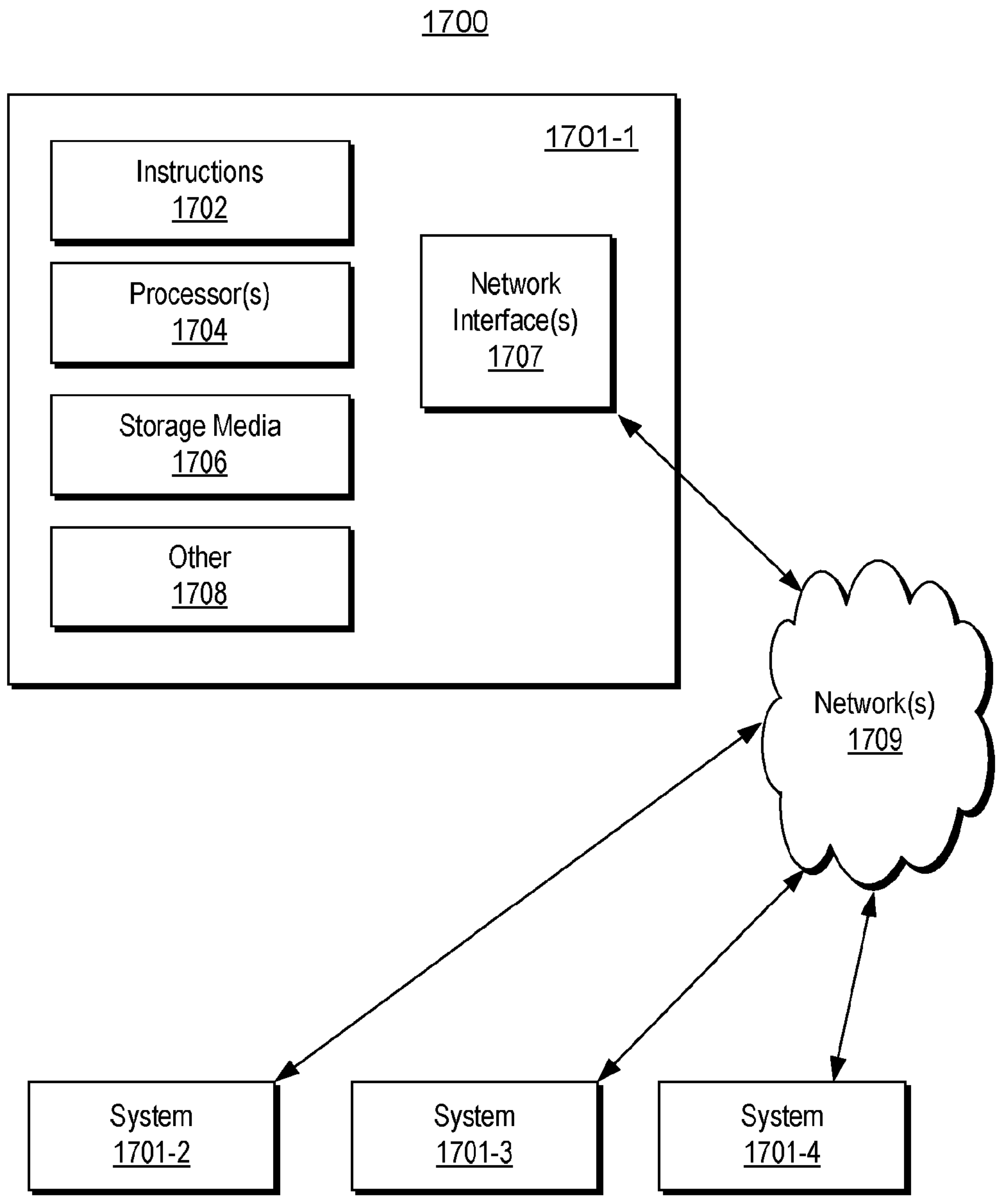
1700
1701-1
Instructions
1702
Processor(s)
1704
Storage Media
1706
Other
1708
Network
Interface(s)
1707
Network(s)
1709
System
1701-2
System
1701-3
System
1701-4

Fig. 17

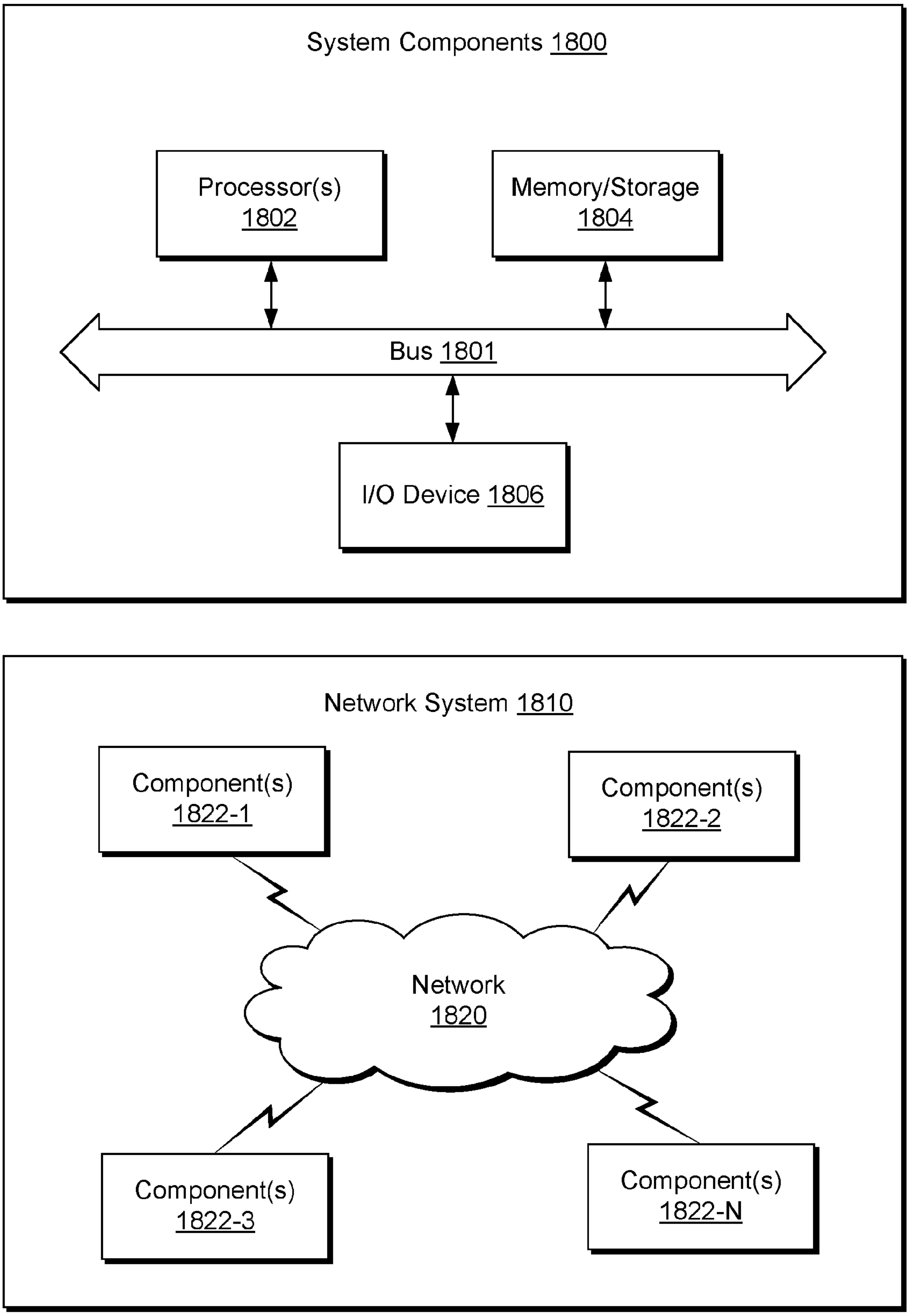
System Components 1800
Processor(s)
1802
Memory/Storage
1804
Bus 1801
I/O Device 1806
Network System 1810
Component(s)
1822-1
Component(s)
1822-2
Network
1820
Component(s)
1822-3
Component(s)
1822-N

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62375889 B


### Non-patent literature cited in the description


- **SHOUXI WANG et al.** Leak Detection for Gas and Liquid Pipelines by Online Modeling. *SPE Projects, Facilities and Construction,* 01 June 2007, vol. 1-9,12-15,21 (02), 1-9